(19) Europäisches Patentamt / European Patent Office / Office européen des brevets

(11) **EP 4 322 588 A1**

## (12) EUROPEAN PATENT APPLICATION
published in accordance with Art. 153(4) EPC

(43) Date of publication:
**14.02.2024 Bulletin 2024/07**

(21) Application number: **22784336.4**

(22) Date of filing: **15.02.2022**

(51) International Patent Classification (IPC):
*H04W 16/28* (2009.01)    *H04W 48/10* (2009.01)

(52) Cooperative Patent Classification (CPC):
**H04W 16/28; H04W 48/10**

(86) International application number:
**PCT/JP2022/005836**

(87) International publication number:
**WO 2022/215351 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.04.2021 JP 2021064486**

(71) Applicant: **Sony Group Corporation**
**Tokyo 108-0075 (JP)**

(72) Inventor: **KUSASHIMA, Naoki**
**Tokyo 108-0075 (JP)**

(74) Representative: **Witte, Weller & Partner**
**Patentanwälte mbB**
**Postfach 10 54 62**
**70047 Stuttgart (DE)**

## (54) COMMUNICATION DEVICE, AND COMMUNICATION METHOD

(57)    A communication device includes a transceiver and a processor. The processor is configured to transmit a master information block (MIB) including first information via the transceiver, in a second frequency range different from a first frequency range. The first information corresponds to an index specifying a combination of second information and third information explicitly included in MIB (to be) transmitted in the first frequency range. The number of bits of the first information is smaller than a total number of bits of the second information and the third information.

FIG.15

| Index of pdcch-ConfigSIB1 | Index of set of resource blocks and slot symbols of CORESET for Type0-PDCCH search space set | Index of parameters for PDCCH monitoring occasions for Type0-PDCCH CSS set |
|---|---|---|
| 0 | 0 | 0 |
| 1 | 0 | 1 |
| 2 | 0 | 2 |
| 3 | 0 | 3 |
| 4 | 0 | 4 |
| 5 | 0 | 5 |
| 6 | 0 | 6 |
| 7 | 0 | 7 |
| 8 | 0 | 8 |
| 9 | 0 | 9 |
| 10 | 0 | 10 |
| 11 | 0 | 11 |
| 12 | 0 | 12 |
| 13 | 0 | 13 |
| 14 | 1 | 0 |
| 15 | 1 | 1 |
| 16 | 1 | 2 |
| 17 | 1 | 3 |
| 18 | 1 | 4 |
| 19 | 1 | 5 |
| 20 | 1 | 6 |
| 21 | 1 | 7 |
| 22 | 1 | 8 |
| 23 | 1 | 9 |
| 24 | 1 | 10 |
| 25 | 1 | 11 |
| 26 | 1 | 12 |
| 27 | 1 | 13 |
| 28 | 2 | 0 |
| 29 | 2 | 1 |
| 30 | 2 | 2 |
| 31 | 2 | 3 |
| 32 | 2 | 4 |
| 33 | 2 | 5 |
| 34 | 2 | 6 |
| 35 | 2 | 7 |
| 36 | 2 | 8 |
| 37 | 2 | 9 |
| 38 | 2 | 10 |
| 39 | 2 | 11 |
| 40 | 2 | 12 |
| 41 | 2 | 13 |
| 42 | 3 | 0 |
| 43 | 3 | 1 |
| 44 | 3 | 2 |
| 45 | 3 | 3 |
| 46 | 3 | 4 |
| 47 | 3 | 5 |
| 48 | 3 | 6 |
| 49 | 3 | 7 |
| 50 | 3 | 8 |
| 51 | 3 | 9 |
| 52 | 3 | 10 |
| 53 | 3 | 11 |
| 54 | 3 | 12 |
| 55 | 3 | 13 |
| 56 | 4 | 0 |
| 57 | 5 | 0 |
| 58 | 6 | 0 |
| 59 | 7 | 0 |

EP 4 322 588 A1

**Description**

Field

The present disclosure relates to a communication device and a communication method.

Background

A radio access system and a wireless network for cellular mobile communication (hereinafter, also referred to as "Long Term Evolution (LTE)", "LTE-Advanced (LTE-A)", "LTE-Advanced Pro (LTE-A Pro)", "Fifth Generation (5G)""New Radio (NR)", "New Radio Access Technology (NRAT)", "Evolved Universal Terrestrial Radio Access (EUTRA)", or "Further EUTRA (FEUTRA)") are considered in 3rd Generation Partnership Project (3GPP). Note that, in the following description, LTE includes LTE-A, LTE-A Pro, and EUTRA, and NR includes NRAT and FEUTRA. In LTE and NR, a base station apparatus (base station) is also referred to as evolved NodeB (eNodeB) in LTE and gNodeB (gNB) in NR, and a terminal device (mobile station, mobile station apparatus, or terminal) is also referred to as user equipment (UE). LTE and NR are cellular communication systems in which a plurality of areas covered by the base station is arranged in cells. Note that a single base station may manage a plurality of cells.

NR is Radio Access Technology (RAT), as a next generation radio access system to LTE, and NR is different from LTE. NR is an access technology that is configured to support various use cases including Enhanced mobile broadband (eMBB), massive machine type communications (mMTC), and ultra reliable and low latency communications (URLLC). NR has been studied for a technical framework that satisfies scenarios, requirement conditions, and allocation scenarios in these use cases.

A study has been made of a high frequency of 52.6 GHz to 71 GHz which is called millimeter wave to meet demands for wider band. In various use cases, such as High data rate eMBB, Mobile data offloading, and Vertical industry factory application, use of a frequency band of 52.6 GHz to 110 GHz has been studied. Non Patent Literature 1 discloses a study on use of the millimeter waves in 3GPP.

Citation List

Non Patent Literature

Non Patent Literature 1: TR 38.808, "3rd Generation Partnership Project; Technical Specification Group Radio Access Network; Study on supporting NR from 52.6 GHz to 71 GHz (Release 17)," v1.0.0, December 2020.

Summary

Technical Problem

However, how to perform an initial access procedure using the millimeter wave described above has not been studied.

Therefore, the present disclosure provides a communication device and a communication method that are configured to perform an initial access procedure using a millimeter wave.

Note that the above problem or object is merely one of a plurality of problems or objects that can be solved or achieved by a plurality of embodiments disclosed herein.

Solution to Problem

According to the present disclosure, a communication device is provided. The communication device includes a transceiver and a processor. The processor is configured to transmit a master information block (MIB) including first information via the transceiver, in a second frequency range different from a first frequency range. The first information corresponding to an index specifying a combination of second information and third information explicitly included in MIB to be transmitted in the first frequency range. The number of bits of the first information being smaller than a total number of bits of the second information and the third information.

Brief Description of Drawings

FIG. 1 is a diagram illustrating an exemplary entire configuration of a communication system according to an embodiment of the present disclosure.

FIG. 2 is a diagram illustrating an example of an SS/PBCH block.

FIG. 3 is a diagram illustrating an exemplary allocation of SS/PBCH blocks.

FIG. 4 is a diagram illustrating an example of information elements (IEs) of MIB.

FIG. 5 is a diagram illustrating an example of information elements (IEs) of MIB.

FIG. 6 is a diagram illustrating an exemplary configuration of a BCCH-BCH message.

FIG. 7A is a table used to configure CORESET #0.

FIG. 7B is a table used to configure CORESET #0.

FIG. 7C is a table used to configure CORESET #0.

FIG. 7D is a table used to configure CORESET #0.

FIG. 7E is a table used to configure CORESET #0.

FIG. 7F is a table used to configure CORESET #0.

FIG. 7G is a table used to configure CORESET #0.

FIG. 7H is a table used to configure CORESET #0.

FIG. 7I is a table used to configure CORESET #0.

FIG. 7J is a table used to configure CORESET #0.

FIG. 7K is a table used to configure CORESET #0.

FIG. 7L is a table used to configure CORESET #0.

FIG. 8A is a table used to configure PDCCH monitoring occasions for Type 0-PDCCH CSS set.

FIG. 8B is a table used to configure PDCCH monitoring occasions for Type 0-PDCCH CSS set.

FIG. 8C is a table used to configure PDCCH monitoring occasions for Type 0-PDCCH CSS set.

FIG. 8D is a table used to configure PDCCH monitoring occasions for Type 0-PDCCH CSS set.

FIG. 8E is a table used to configure PDCCH monitoring occasions for Type 0-PDCCH CSS set.

FIG. 9A is a diagram illustrating an exemplary multiplexing of an SS/PBCH block and CORESET.

FIG. 9B is a diagram illustrating an exemplary multiplexing of an SS/PBCH block and CORESET.

FIG. 9C is a diagram illustrating an exemplary multiplexing of an SS/PBCH block and CORESET.

FIG. 10A is a table illustrating a relationship between $k_{SSB}$, pdcchConfig-SIB1, and GSCN in FR1.

FIG. 10B is a table illustrating a relationship between $k_{SSB}$, pdcchConfig-SIB1, and GSCN in FR2.

FIG. 11 is a table illustrating a relationship between subCarrierSpacingCommon, a minimum bit of ssb-SubcarrierOffset, and $N_{SSB}^{QCL}$.

FIG. 12 is a block diagram illustrating an exemplary configuration of a base station apparatus according to an embodiment of the present disclosure.

FIG. 13 is a diagram illustrating an exemplary configuration of a terminal device according to an embodiment of the present disclosure.

FIG. 14 is a diagram illustrating an indication method for secondary PBCH according to an embodiment of the present disclosure.

FIG. 15 is an exemplary table used for PDCCH configuration for {SS/PBCH block, PDCCH} SCS of {120, 120} kHz according to an embodiment of the present disclosure.

FIG. 16 is an exemplary table used for PDCCH configuration for {SS/PBCH block, PDCCH} SCS of {120, 120} kHz according to an embodiment of the present disclosure.

FIG. 17 is an exemplary table used to report GSCN in FR3 according to an embodiment of the present disclosure.

FIG. 18 is an exemplary table illustrating combinations of subCarrierSpacingCommon and ssb-SubcarrierOffset for an SS/PBCH block of 120 kHz according to an embodiment of the present disclosure.

FIG. 19 is an exemplary table used to report GSCN in FR3 according to an embodiment of the present disclosure.

FIG. 20 is an exemplary table used to report GSCN in FR3 according to an embodiment of the present disclosure.

FIG. 21 is a diagram illustrating an exemplary configuration of secondary PBCH according to an embodiment of the present disclosure.

FIG. 22 is a diagram illustrating an exemplary multiplexing method for secondary PBCH and SS/PBCH block according to an embodiment of the present disclosure.

FIG. 23 is a diagram illustrating another exemplary multiplexing method for secondary PBCH and SS/PBCH block according to an embodiment of the present disclosure.

FIG. 24 is a diagram illustrating another exemplary multiplexing method for secondary PBCH and SS/PBCH block according to an embodiment of the present disclosure.

FIG. 25 is a diagram illustrating another exemplary multiplexing method for secondary PBCH and SS/PBCH block according to an embodiment of the present disclosure.

FIG. 26 is a diagram illustrating another exemplary multiplexing method for secondary PBCH and SS/PBCH block according to an embodiment of the present disclosure.

Description of Embodiments

Exemplary embodiments of the present disclosure will be described in detail below with reference to the accompanying drawings. Note that in the present description and the drawings, component elements having substantially the same functional configurations are designated by the same reference numerals, and redundant description thereof will be omitted.

Furthermore, in the present description and the drawings, component elements having substantially the same functional configurations will be distinguished by giving the same reference numerals followed by different alphabets in some cases. For example, a plurality of component elements having substantially the same functional configurations is distinguished as necessary, such as base station apparatuses 20A and 20B. However, when there is no need to particularly distinguish the plurality of elements having substantially the same functional configurations, the elements are denoted by only the same reference numerals. For example, the base station apparatuses 20A and 20B are simply referred to as base station apparatuses 20, unless otherwise distinguished.

One or more embodiments (including examples and modifications) which are described below can be implemented independently. Meanwhile, at least some of a plurality of embodiments described below may be appropriately combined with at least some of the other embodiments. The plurality of embodiments can include novel features different from each other. Therefore, the plurality of embodiments can contribute to solving different objects or problems, having different effects.

<<Introduction>>

<Exemplary system configuration>

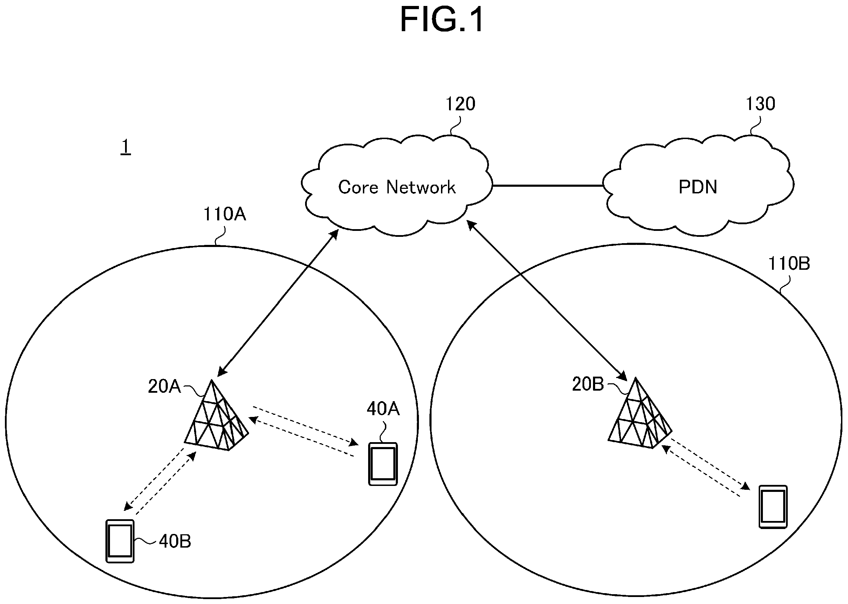

FIG. 1 is a diagram illustrating an exemplary entire configuration of a communication system 1 according to an embodiment of the present disclosure. As illustrated in FIG. 1, the communication system 1 includes a plurality of base station apparatuses 20 (20A and 20B), a plurality of terminal devices 40 (40A and 40B), a core network 120, and a packet data network (PDN) 130. Note that the number of the base station apparatuses 20 and the number of the terminal devices 40 are not limited thereto, and for example, one base station apparatus 20 and one terminal device 40 may be adopted.

Each of the base station apparatuses 20 is a communication device that operates a cell 110 and that provides a wireless communication service to one or more terminal devices 40 located inside the coverage of the cell 110. The cell 110 is operated according to any wireless communication system such as LTE or NR. The base station apparatus 20 is connected to the core network 120. The core network 120 is connected to a packet data network (PDN) 130 via a gateway device (not illustrated). Furthermore, the base station apparatus 20 may include a set of a plurality of physical or logical devices. For example, in the present embodiment of the present disclosure, the base station apparatus 20 may be divided into a plurality of devices of a baseband unit (BBU) and a radio unit (RU) so as to be considered as an assembly of the plurality of devices. Additionally or alternatively, in the embodiments of the present disclosure, the base station apparatus 20 may be either or both of the BBU and the RU. The BBU and the RU may be connected through a predetermined interface (e.g., eCPRI). Additionally or alternatively, the RU may be referred to as remote radio unit (RRU) or radio dot (RD). Additionally or alternatively, the RU may correspond to gNB-DU which is described later. Additionally or alternatively, the BBU may correspond to gNB-CU to be described later. Additionally or alternatively, the RU may be a device integrally formed with an antenna. An antenna of the base station apparatus 20 (e.g., an antenna integrally formed with RU) may adopt an advanced antenna system and support MIMO (e.g., FD-MIMO) or beamforming. In the advanced antenna system, the antennas of the base station apparatus 20 (e.g., the antenna integrally formed with RU) may include, for example, 64 transmission antenna ports and 64 reception antenna ports.

Note that the plurality of base station apparatuses 20 may be connected to each other. One or more base station apparatuses 20 may be included in a radio access network (RAN). In other words, the base station apparatus 20 may be simply referred to as RAN, RAN node, access network (AN), or AN node. RAN in LTE is referred to as enhanced universal terrestrial RAN (EUTRAN). RAN in NR is referred to as NGRAN. RAN in W-CDMA (UMTS) is referred to as UTRAN. Note that the base station apparatus 20 in LTE is referred to as evolved Node B (eNodeB) or eNB. In other words, EUTRAN includes one or more eNodeB nodes (eNBs). Furthermore, the base station apparatus 20 in NR may be referred to as gNodeB or gNB. In other words, NGRAN includes one or more gNBs. Furthermore, EUTRAN may include gNB (en-gNB) connected to a core network (EPC) in an LTE communication system (EPS). Likewise, NGRAN may include ng-eNB that is connected to a core network 5GC in a 5G communication system (5GS). Additionally or alternatively, when the base station apparatus 20 is eNB, gNB, or the like, the base station may be referred to as 3GPP access. Additionally or alternatively, when the base station apparatus 20 is a wireless access point, the base station may be referred to as non-3GPP access. Additionally or alternatively, the base station apparatus 20 may be an optical extension device called Remote Radio Head (RRH). Additionally or alternatively, when the base station apparatus 20 is gNB, the base station apparatus 20 may be referred to as a combination of a gNB central unit (CU) and a gNB distributed unit (DU) or any thereof. The gNB central unit (CU) hosts a plurality of upper layers (e.g., RRC, SDAP, and PDCP) of an access stratum, for communication with UE. Meanwhile, the gNB-DU hosts a plurality of lower layers (e.g., RLC, MAC, and PHY) of the access stratum. In other words, among messages/information which are described later, RRC signalling (e.g., various SIBs, RRCSetup messages, and RRCReconfiguration messages including MIB and SIB1) may be generated by the gNB CU, while DCI and various physical channels (e.g., PDCCH and PBCH) which are described later may be generated by the gNB-DU. Alternatively, of RRC signalling, for example, a partial configuration such as IE:cellGroupConfig may be generated by the gNB-DU, and the remaining configurations may be generated by the gNB-CU. These configurations may be transmitted and received through an F1 interface. The base station apparatus 20 may be configured to be communicable with another base station apparatus 20. For example, when the plurality of base station apparatuses 20 is eNBs or has a combination of eNB and en-gNB, the base station apparatuses 20 may be connected through an X2 interface. Additionally or alternatively, when the plurality of base station apparatuses 20 is gNBs or has a combination of gn-eNB and gNB, the base station apparatuses 20 may be connected through an Xn interface. Additionally or alternatively, when the plurality of base station apparatuses 20 has a combination of the gNB central unit (CU) and the gNB distributed unit (DU), the base station apparatuses 20 may be connected through the F1 interface described above. The messages/information (RRC signalling information or DCI information, or physical channel) may be communicated between a plurality of base station apparatuses 20 (e.g., via X2, Xn, or F1 interface).

Furthermore, as described above, the base station apparatus 20 may be configured to manage a plurality of the cells. Each of the cells provided by the base station apparatus 20 is referred to as serving cell. The serving cells may include a primary cell (PCell) and a secondary cell (SCell). When dual connectivity (e.g., EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity) is provided to UE (e.g., terminal device 40), the PCell and zero or one or more SCell(s) provided by MN (master node) are referred to as master cell group. Furthermore, the serving cell may include a primary secondary cell or primary SCG cell (PSCell). In other words, when dual connectivity is provided to the UE, the PSCell and zero or one or more sCell(s) provided by a secondary node (SN) are referred to as secondary cell group (SCG). Unless otherwise specifically specified (e.g., PUCCH on SCell), a physical uplink control channel (PUCCH) is transmitted on the PCell and PSCell, but is not transmitted on the SCell. Furthermore, radio link failure is also detected on the PCell and the PSCell, but is not detected (may not be detected) on the SCell. As described above, the PCell and the PSCell that play special roles on the serving cell are also referred to as special cell (SpCell). In one cell, one downlink component carrier and one uplink component carrier may be associated with each other. Furthermore, a system bandwidth corresponding to one cell may be divided into a plurality of bandwidth parts (BWPs). In this configuration, one or more bandwidth parts (BWPs) may be set for UE and one of the bandwidth parts may be used as active BWP by the UE. In addition, radio resources (e.g., frequency band and numerology (sub-carrier spacing)) and slot format (slot configuration), used by the terminal device 40, may be different between cells, component carriers, or BWPs.

When the core network 120 is an NR core network (5G Core (5GC)), the core network 120 can include an access and mobility management function (AMF), a session management function (SMF), a user plane function (UPF), a policy control function (PCF), and a unified data management (UDM).

When the core network 120 is an LTE core network (evolved packet core (EPC)), the core network 120 can include a mobility management entity (MME), a serving gateway (S-GW), a PDN gateway (P-GW), a policy and charging rule function (PCRF), and a home subscriber server (HSS). AMF and MME are control nodes that handle control plane signals and manage the movement states (mobility) of the terminal devices 40. UPF and S-GW/P-GW are nodes that handle user plane signals. PCF/PCRF is a control node that performs control of policy and charging, such as quality of service (QoS) for a PDU session or bearer. UDM/HSS is a control node that handles subscriber data and performs service control.

Each of the terminal devices 40 is a communication device that wirelessly communicates with the corresponding base station apparatus 20, on the basis of the control of the base station apparatus 20. For example, the terminal device 40 measures a downlink signal from the base station apparatus 20 and reports measurement information indicating a result of the measurement to the base station apparatus 20. The base station apparatus 20 controls wireless communication with the terminal device 40 on the basis of the reported measurement information. Meanwhile, the terminal device 40 can transmit an uplink signal for measurement to the base station apparatus 20. In this configuration, the base station apparatus 20 measures the uplink signal from the terminal device 40 and controls wireless communication with the terminal device 40 on the basis of information about the measurement.

As described above, the base station apparatuses 20 are configured to transmit and receive information to and from each other by using an interface between base stations. When the core network is 5GC, the interface between base stations may be the Xn interface. When the core network is EPC, the interface between base stations may be the X2 interface. For example, the base station apparatus 20 transmits measurement information (e.g., a measurement result of a cell managed by a source base station apparatus and a measurement result of an adjacent cell) about a terminal device 40, handover of which is predicted, to another adjacent base station apparatus 20. Thus, stable handover is achieved, and the stability of the wireless communication of the terminal device 40 is ensured.

Note that, although not illustrated in FIG. 1, around the communication system 1, there can be a communication device that provides a wireless communication service operated by another RAT such as Wi-Fi (registered trademark) or MulteFire (registered trademark) other than cellular communication. Such a communication device is typically connected to the PDN 130.

Here, the terminal device 40 according to the embodiment of the present disclosure includes a first terminal device 40A and a second terminal device 40B. The first terminal device 40A is a terminal device that supports an operating band within a first frequency range (e.g., frequency range 1 (FR1) or frequency range 2 (FR2)).

In addition, the second terminal device 40B is a terminal device that supports an operating band within a band of 52.6 GHz or more, that is, a second frequency range (It is also referred to as extended FR2 (eFR2) or frequency range 3 (FR3)).

<Related art>

Next, a technology related to an initial access (cell access) procedure in a communication system that support FR1 and FR2 will be described.

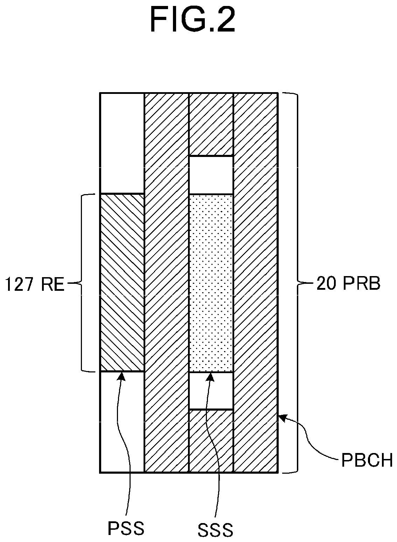

FIG. 2 is a diagram illustrating an example of an SS/PBCH block. The SS/PBCH block (SSB block) includes a primary synchronization signal (PSS), a secondary synchronization signal (SSS), a physical broadcast channel (PBCH), and a PBCH demodulation reference signal (DMRS). PSS and SSS include 127 sequences and are allocated to 127 REs. PSS is allocated to the first symbol of the SS/PBCH block, and SSS is allocated to the third symbol of the SS/PBCH block. PBCH is allocated to the second to fourth symbols. PBCH is allocated to 20 physical resource blocks (PRBs) in the second and fourth symbols, and allocated to four PRBs below and above in the SS/PBCH block in the third symbol.

SS/PBCH blocks having the same center frequency carry the same master information block (MIB). Meanwhile, SS/PBCH blocks having different center frequencies may carry different MIBs.

Furthermore, multiple SS/PBCH blocks are located on the same center frequency. Different SS/PBCH block indices are allocated to the SS/PBCH blocks. The first terminal device 40A may assume that SS/PBCH blocks having the same block index on the same center frequency are Quasi Co-Located (QCL) with each other. Meanwhile, the terminal device 40 may not assume that SS/PBCH blocks located on different center frequencies or SS/PBCH blocks having different block indices located on the same center frequency are QCL.

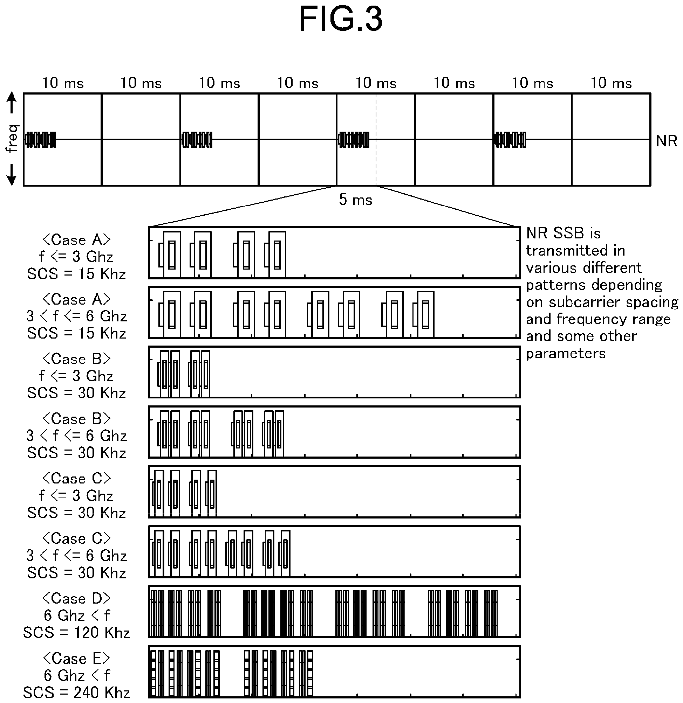

FIG. 3 is a diagram illustrating an exemplary allocation of the SS/PBCH blocks. The SS/PBCHs are allocated as illustrated in FIG. 3 as an example. One or more SS/PBCH blocks are allocated in a half-frame (5 msec). Multiple SS/PBCH blocks in a half-frame is also referred to as an SS/PBCH block burst or SSB burst.

The maximum number of SS/PBCH blocks allocated in one half-frame is defined as Lmax, and Lmax is 4 in FR1 and at 3 GHz or less, 8 in FR1 and at 3 GHz or more, 10 in an unlicensed band and for 15 kHz SCS, 20 in an unlicensed band and for 30 kHz SCS, and 64 in FR2. In other words, the number of multiple SSBs in one SSB burst can depend on subcarrier spacing associated with frequency band.

The first symbol of each of one or more SS/PBCH blocks is allocated to the following symbols:

- Case A:{2,8}+14×n
- Case B:{4,8,16,20}+28×n
- Case C:{2,8}+14×n
- Case D:{4,8,16,20}+28×n
- Case E:{2,8}+14×n

Here, n is any positive number.

The periodicity of the SS/PBCH block burst can be set to any of 5, 10, 20, 40, 80, and 160 msec. Meanwhile, in the initial cell selection, the terminal device 40 assumes that the periodicity of the SS/PBCH block burst is 20 msec.

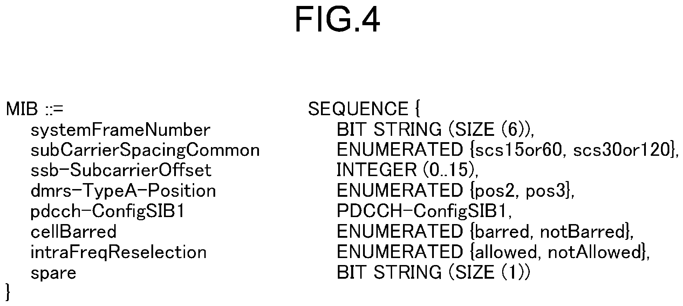

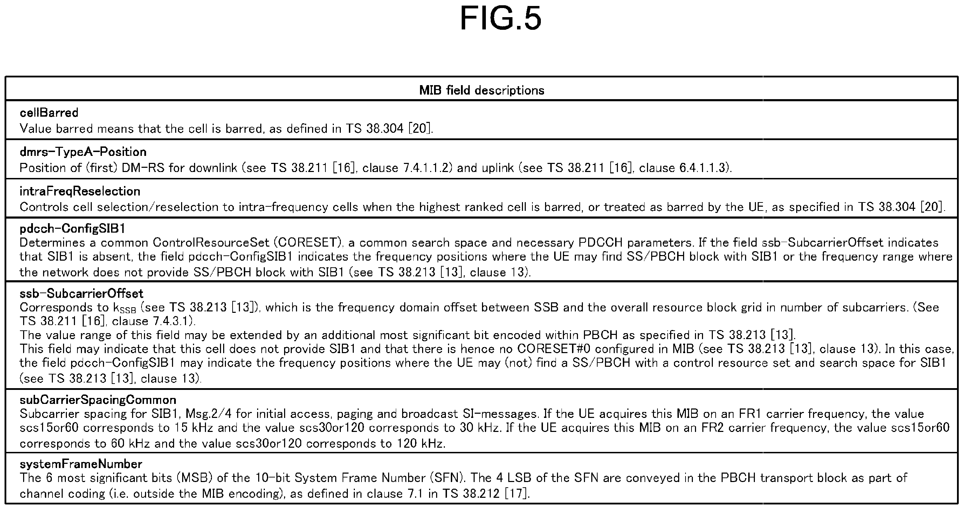

FIGS. 4 and 5 are each a diagram illustrating an example of information elements (IE) of MIB. NR-MIB includes 23 bits. MIB includes information elements (IE) illustrated in FIGS. 4 and 5.

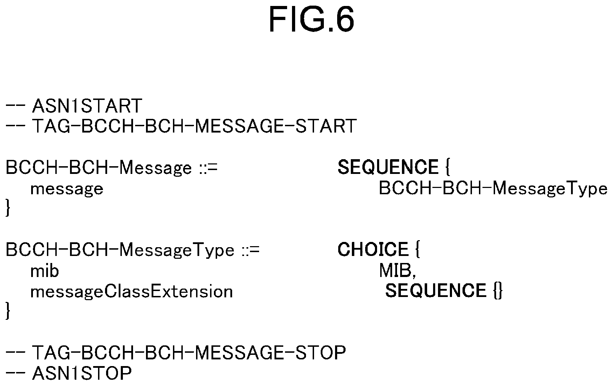

FIG. 6 is a diagram illustrating an exemplary configuration of a BCCH-BCH message. A broadcast control channel (BCCH) is mapped to a broadcast channel (BCH). As illustrated in FIG. 6, BCH is made of MIB or message-ClassExtension. For MIB, BCH data contains a total of 24 bits of the number of bits of MIB of 23 bits + 1 bit for choice.

PBCH payload contains the first, second, third, and fourth SFN LSBs and half-frame bits, in addition to BCH data.

Furthermore, when Lmax is 64 (i.e., in FR2), the PBCH payload contains the fourth, fifth, and sixth synchronization signal/PBCH blocks (SSBs) indexes, and otherwise (i.e., in FR1), contains $k_{SSB}$ MSB and a 2-bit reserved bit.

In NR, RMSI (SIB1) is transmitted on a physical downlink shared channel (PDSCH) and PDCCH scheduling the PDSCH. The PDCCH is allocated to a search space of a Type0-PDCCH CSS set. In addition, CRC scrambled by SI-RNTI is added to the PDCCH.

In the initial access to a cell (e.g., including Cell Search, Cell selection/reselection, Random Access procedure, and RRC Connection Establishment procedure), the terminal device 40 (UE) performs configuration of CORESET #0 (CORESET for Type 0-PDCCH search space set) and Type 0-PDCCH CSS by MIB. Specifically, the terminal device 40 (UE) receives SSB and receives MIB mapped on PBCH included in the SSB. An 8-bit PDCCH configuration (pdcch-ConfigSIB1) contained in MIB configures CORESET #0 (controlResourceSetZero) and a PDCCH monitoring occasion for TypeO-PDCCH CSS set (SearchSpace Zero).

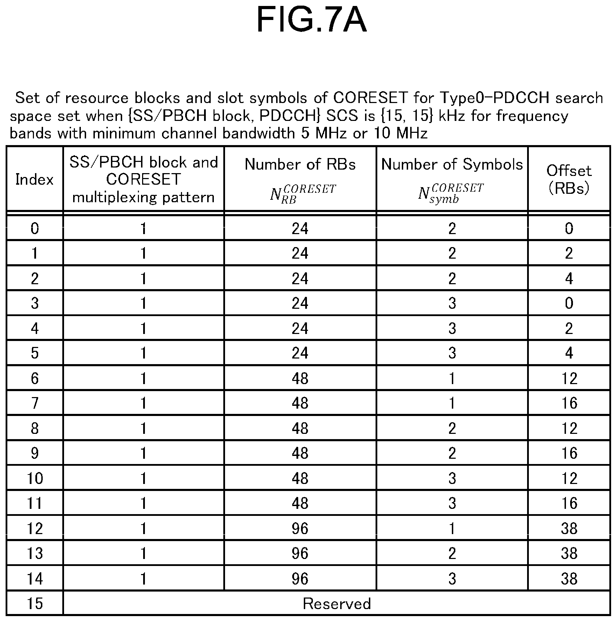

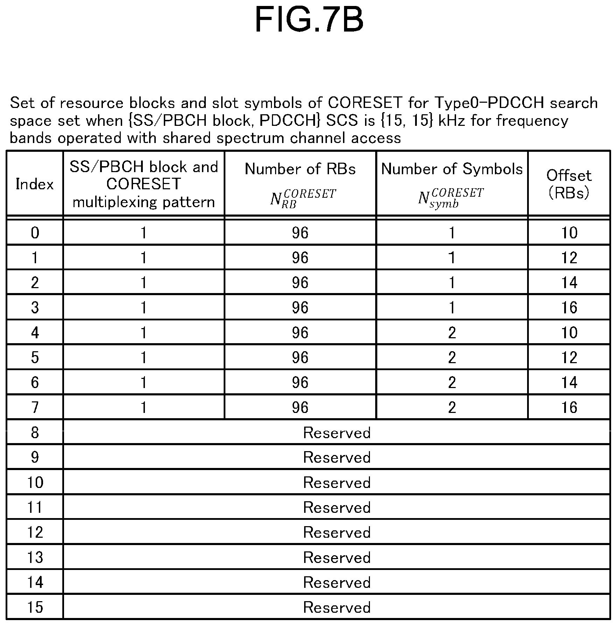

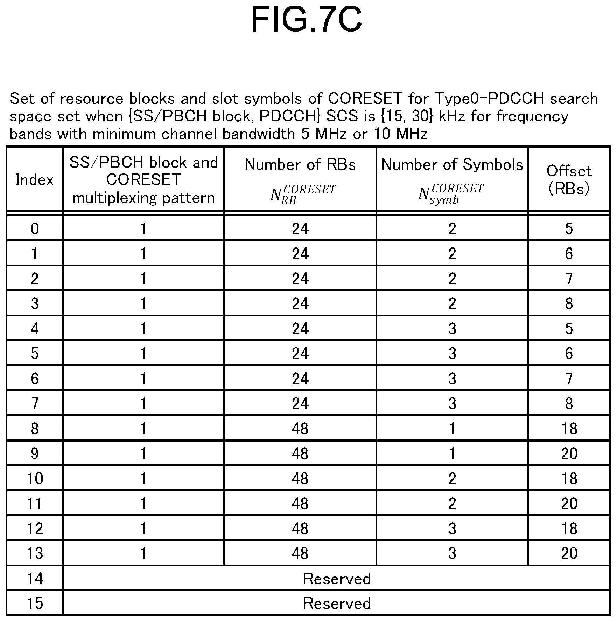

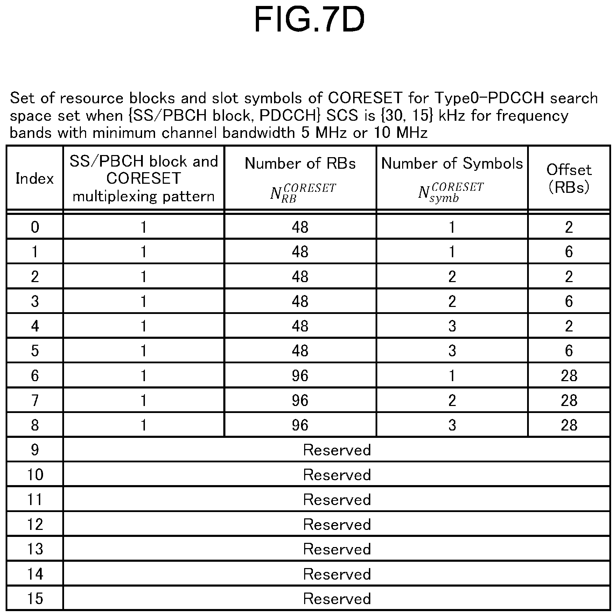

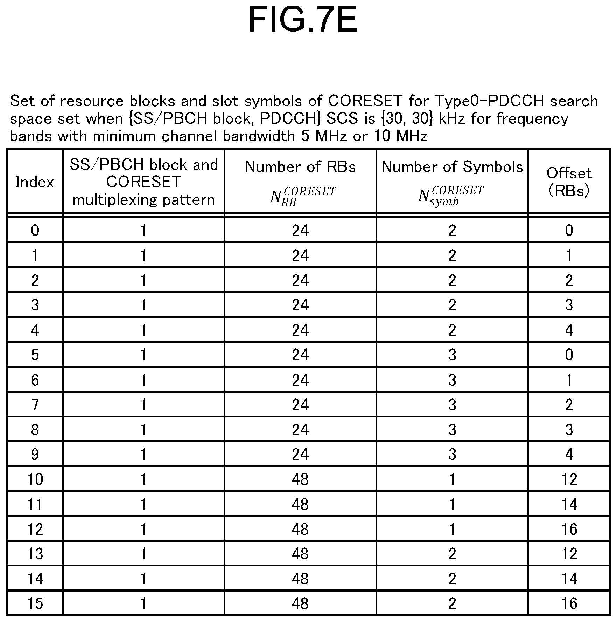

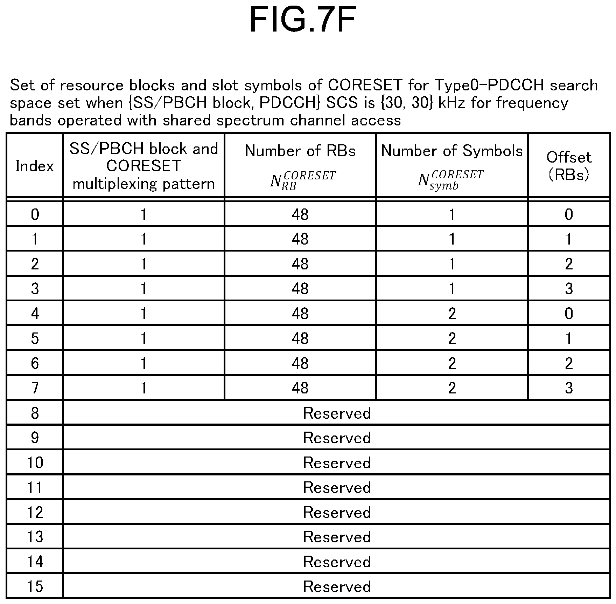

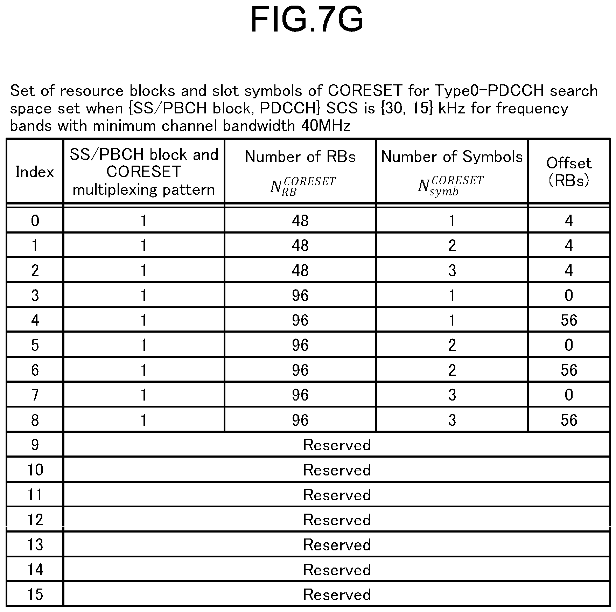

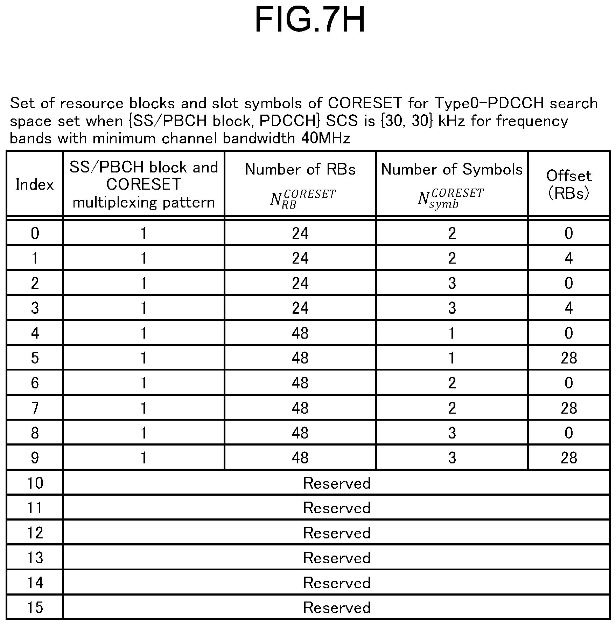

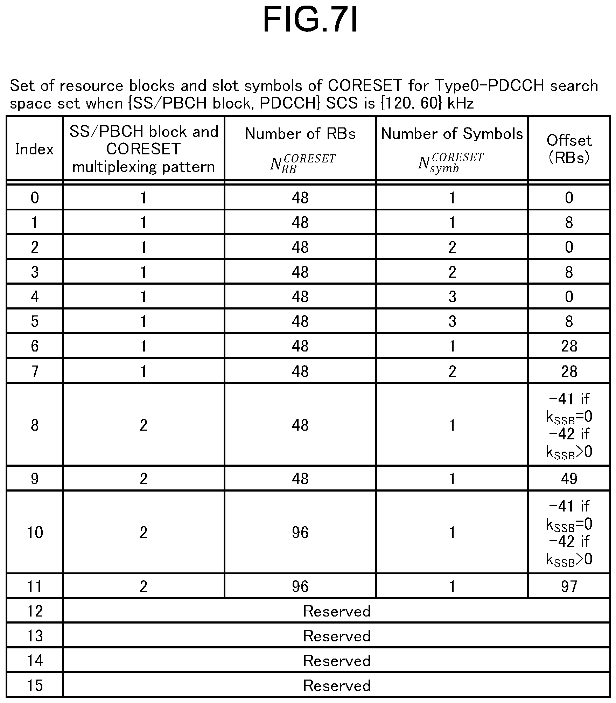

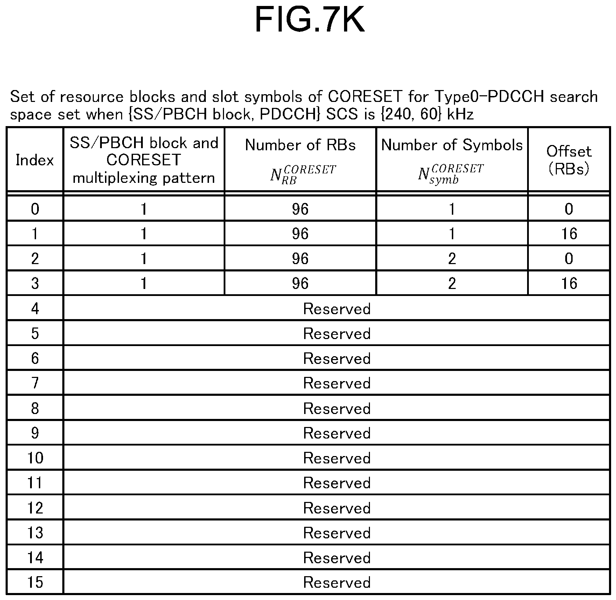

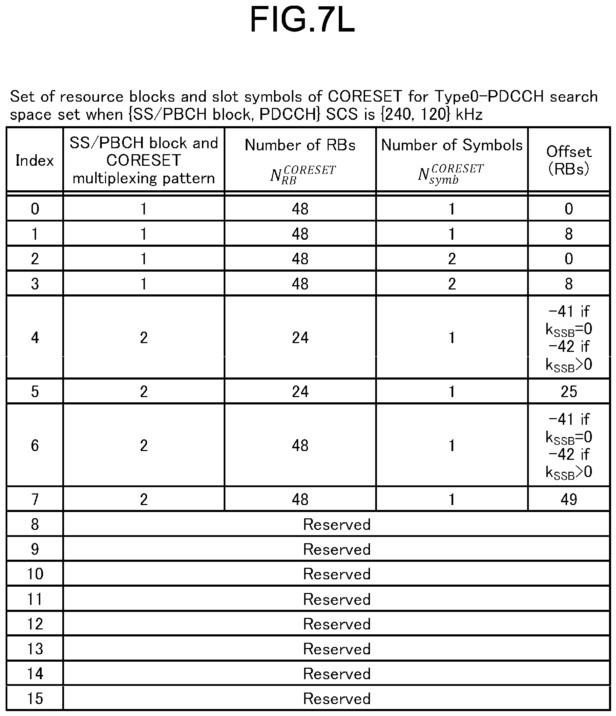

FIGS. 7A to 7L are each a table used to configure CORESET #0. The configuration of CORESET #0 reported by MIB is performed by using an index represented by higher four bits of the PDCCH configuration (pdcch-ConfigSIB1) and each of the tables illustrated in FIGS. 7A to 7L. The index indicated by the higher four bits of the PDCCH configuration (pdcch-ConfigSIB1) specifies an SS/PBCH block and CORESET multiplexing pattern, the number of resource blocks (RBs), the number of symbols, and a resource block offset from the SS/PBCH block, for CORESET #0.

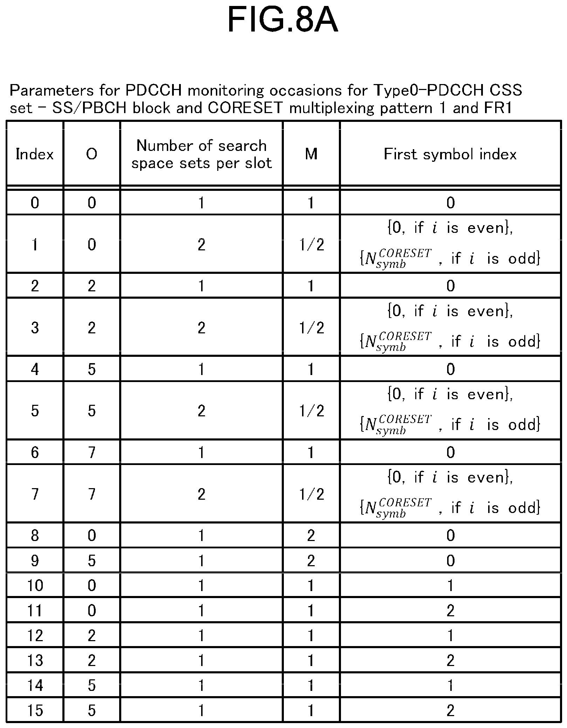

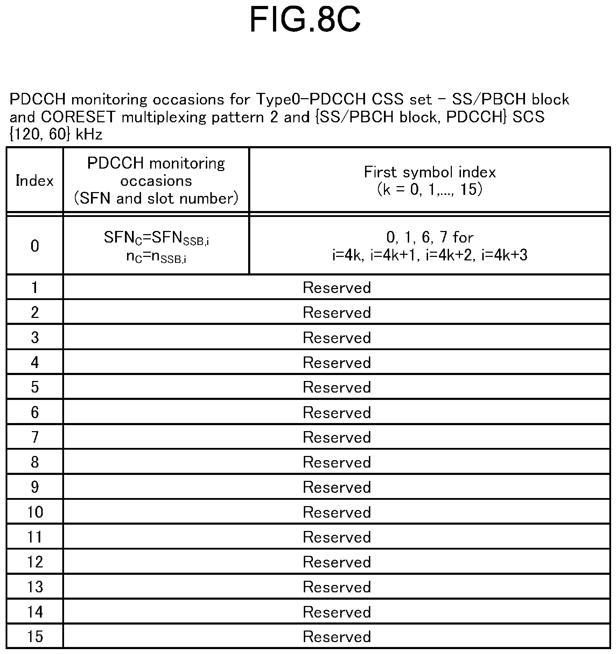

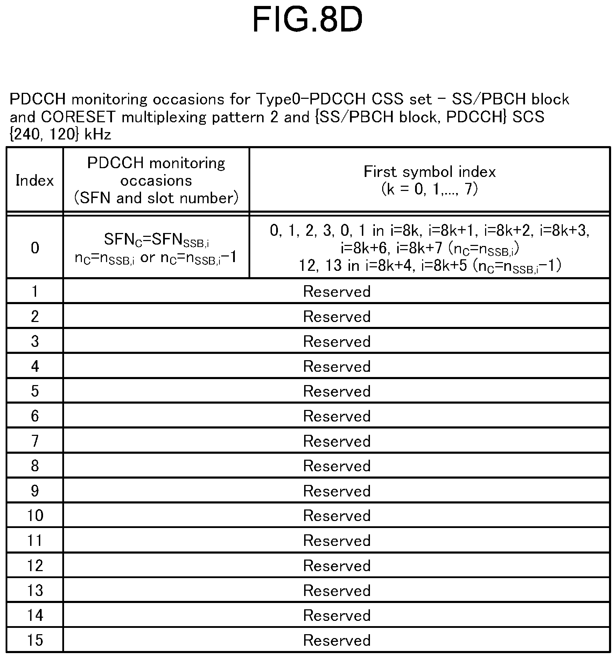

FIGS. 8A to 8E are each a table used to configure PDCCH monitoring occasions for Type 0-PDCCH CSS set. The configuration of the PDCCH monitoring occasion for TypeO-PDCCH CSS set reported by MIB is reported by using an index indicated by the lower four bits of the PDCCH configuration (pdcch-ConfigSIB1) and each of the tables illustrated in FIGS. 8A to 8E. The index indicated by the lower four bits of the PDCCH configuration (pdcch-ConfigSIB1) specifies a value O specifying a start slot of the PDCCH monitoring occasion, the number of search space sets in the slot, a value M indicating a relationship between an SS/PBCH block and the PDCCH monitoring occasion, and a first symbol index, for the TypeO-PDCCH CSS set.

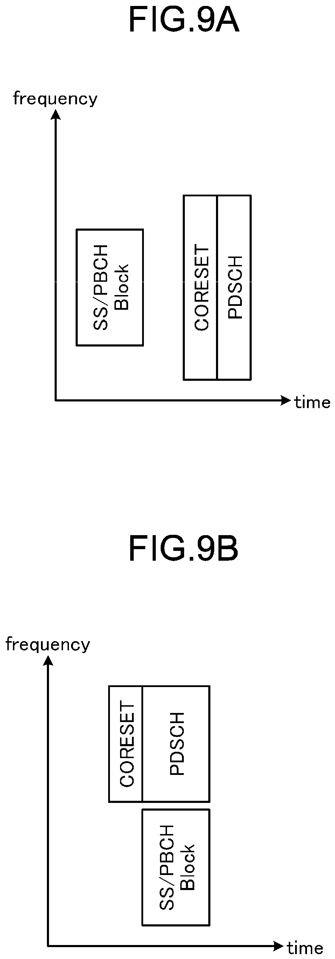

Here, an exemplary multiplexing of an SS/PBCH block and CORESET (SS/PBCH block and CORESET multiplexing pattern) will be described. FIGS. 9A to 9C are each a diagram illustrating an exemplary multiplexing of an SS/PBCH block and CORESET. As illustrated in FIGS. 9A to 9C, three patterns of the SS/PBCH block and the CORESET multiplexing pattern are defined.

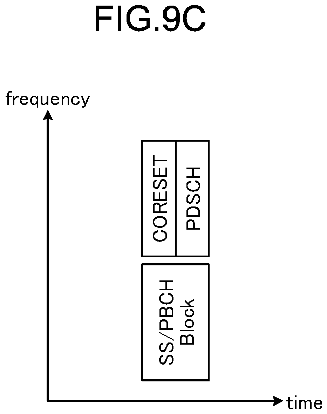

In a multiplexing pattern 1 illustrated in FIG. 9A, the SS/PBCH block, CORESET #0, and PDSCH that carries SIB1 are multiplexed using time division multiplexing (TDM). In a multiplexing pattern 2 illustrated in FIG. 9B, the SS/PBCH block and CORESET #0 are multiplexed using TDM, and the SS/PBCH block and PDSCH that carries SIB1 are multiplexed using frequency division multiplexing (FDM). In a multiplexing pattern 3 illustrated in FIG. 9C, the SS/PBCH block and CORESET #0 are multiplexed using FDM, and the SS/PBCH block and PDSCH that carries SIB1 are multiplexed using FDM.

Note that, after cell access (e.g., after transition to RRC_Connected in PCell), the configuration of CORESET #0 and/or the configuration of TypeO-PDCCH CSS set can be overwritten by dedicated RRC signaling (i.e., RRCSetup message and RRCReconfiguration message).

The SS/PBCH block can further include cell defining SSB and non-cell defining SSB. The Cell defining SSB is defined as an SS/PBCH block having CORESET for the TypeO-PDCCH CSS set, and the non-cell defining SSB is defined as an SS/PBCH block having no CORESET for the TypeO-PDCCH CSS set.

$k_{SSB}$ is used as a parameter for reporting whether the cell defining SSB is used or the non-cell defining SSB is used. In FR1, when $k_{SSB}$ indicates 23 or less, a detected SS/PBCH block is the cell defining SSB, and when $k_{SSB}$ indicates 24 or more, the detected SS/PBCH block is the non-cell defining SSB. In FR2, when $k_{SSB}$ indicates 12 or less, the detected SS/PBCH block is the cell defining SSB, and when $k_{SSB}$ indicates 13 or more, the detected SS/PBCH block is the non-cell defining SSB.

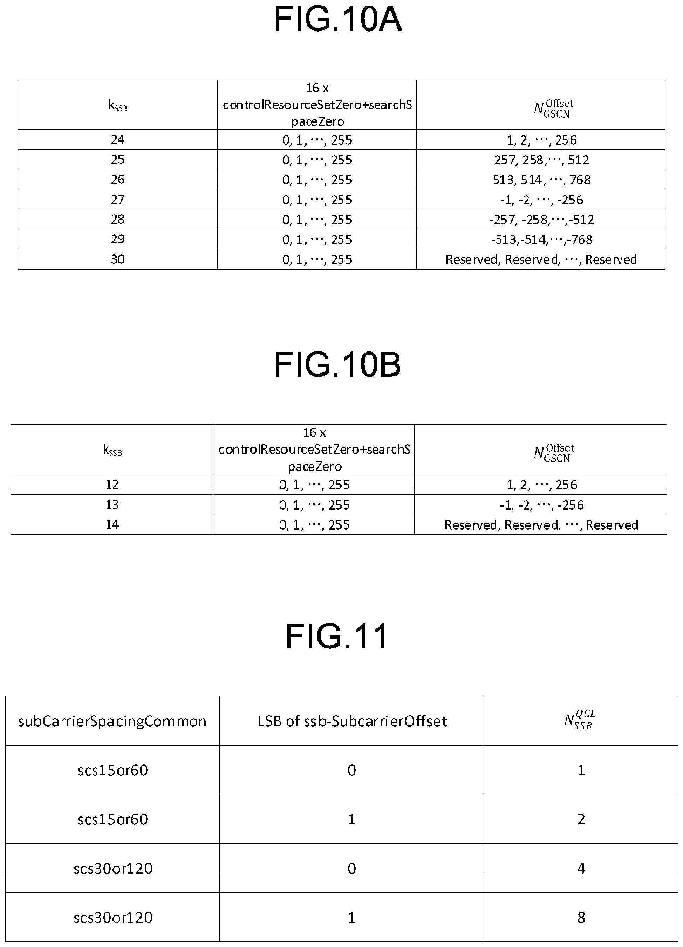

When the detected SS/PBCH block is the cell defining SSB, the terminal device attempts to receive SIB1 by using pdcchConfig-SIB1 contained in MIB. Meanwhile, when the detected SS/PBCH block is the non-cell defining SSB, detection of the cell defining SSB is attempted, on the basis of FIGS. 10A and 10B and a frequency position (Global Synchronization Channel Number; GSCN) of the cell defining SSB reported by pdcchConfig-SIB1. In addition, when $k_{SSB}$ indicates 31 in FR1 and $k_{SSB}$ indicates 15 in FR2, it is reported that there is no cell defining SSB in frequencies in the range available, illustrated in FIGS. 10A and 10B.

In shared spectrum channel access (unlicensed band) operation, a discovery burst transmission window (DBTW) is configured. Within the discovery burst transmission window, multiple SS/PBCH blocks the same in QCL may be transmitted. The terminal device assumes that the SS/PBCH blocks of serving cells in the discovery burst transmission window whose ($N_{DM\text{-}RS}^{PBCH} \bmod N_{SSB}^{QCL}$) are the same are the same in QCL. Here, $N_{DM\text{-}RS}^{PBCH}$ is an index of a DMRS sequence of PDCH, $N_{SSB}^{QCL}$ is information indicating the number of SSB QCLs, which are given from the least significant bit (LSB) of subCarrierSpacingCommon and ssb-SubcarrierOffset of FIG. 11.

The discovery burst transmission window enables increase of SS/PBCH block candidates in the shared spectrum channel access.

<FR3(Frequency Range 3)>

In NR, a frequency band of 52.6 GHz or more can be supported. A frequency range from 52.6 GHz to 71 GHz is also referred to as FR3.

Both licensed band and unlicensed band can be included in FR3 can include.

In the unlicensed band in FR3, listen before talk (LBT) is performed. In an unlicensed band operation, the communication device performs sensing before transmission of a signal. When power detected by sensing is smaller than a predetermined threshold, it is regarded that the LBT is successfully performed (channel is clear), and signal transmission is started. Meanwhile, when the power detected by sensing is larger than the predetermined threshold, it is regarded that LBT results in failure (channel is busy), and the transmission of the signal is stopped for a predetermined period.

In FR3, at most 64 SS/PBCH blocks different in QCL (different beams) are provided. In other words, in FR3, Lmax is 64.

In FR3, an uplink physical channel and a downlink physical channel support 120 kHz, 480 kHz, and 960 kHz sub-carrier spacing (SCS). In FR3, the SS/PBCH block supports all or part of 120 kHz, 240 kHz, 480 kHz, and 960 kHz SCS.

Case D or Case E can be applied as an exemplary allocation of the SS/PBCH blocks with 480 kHz SCS. Case D or Case E can be applied as an exemplary allocation of the SS/PBCH block with 960 kHz SCS.

In FR3, a bandwidth of up to 2.16 GHz can be supported.

<Technical problem >

In 3GPP RAN 1 meeting #104, it was agreed that PBCH payload size and the number of PBCH DMRS sequences each do not exceed conventional size. In other words, also in FR3, the SS/PBCH block is designed so that the PBCH payload size does not exceed 32 bits and the number of PBCH DMRS sequences does not exceed 8.

Meanwhile, in NR for FR3, many pieces of system information can be transmitted in MIB. Specifically, it is assumed that one or more combinations of the following system information may be transmitted in MIB.

- systemFrameNumber
- subCarrierSpacingCommon
- ssb-SubcarrierOffset
- dmrs-TypeA-Position
- pdcch-ConfigSIB1
- cellBarred
- intraFreqReselection
- information indicating the number of SSB QCLs
- information indicating licensed band operation or unlicensed band operation
- spare

In particular, in FR3, subCarrierSpacingCommon, ssb-SubcarrierOffset, the information indicating the number of SSB QCLs, the information indicating licensed band operation or unlicensed band operation, and a candidate SSB index may cause an increase in the amount of information to be reported, as compared with that in MIB for FR2.

Information about subCarrierSpacingCommon indicates SCS of PDCCH for Type0-PDCCH CSS set. In FR3, when 120 kHz, 480 kHz, and 960 kHz SCS are supported, 2-bit information may be required.

Information about ssb-SubcarrierOffset indicates a sub-carrier offset between the SS/PBCH block and CORESET #0. In FR3, when CORESET #0 of 960 kHz is specified from an SS/PBCH block of 120 kHz, at most 96 sub-carrier offset values can be reported, and therefore 7-bit information may be required.

As the information indicating the number of SSB QCLs, seven types of information of 1, 2, 4, 8, 16, 32, and 64 can be reported in FR3, and thus 3-bit information can be required.

The information indicating licensed band operation or unlicensed band operation is information not being in the PBCH payload for FR2. Transmission of the information indicating licensed band operation or unlicensed band operation allows the terminal device to switch between the license operation and the unlicensed operation from the initial connection. A specific example includes a discovery burst transmission window. When the licensed band operation is reported by the information, the terminal device assumes that the discovery burst transmission window is disabled, and attempts to receive at most 64 SS/PBCH blocks different in index. Meanwhile, when the unlicensed operation is reported by the information, the terminal device assumes that the discovery burst transmission window is enabled, and attempts to receive 64 or more SS/PBCH blocks different in index.

Note that the licensed band operation may be an unlicensed band operation without requiring LBT. For example, in the unlicensed band, if transmission satisfies a condition without requiring LBT (e.g., a condition of short control signaling), the transmission may be regarded as the licensed band operation. It should be noted that the condition of the short control signaling is that a total of transmission period of the short control signaling is 10% (10 milliseconds) or less of 100 milliseconds.

Furthermore, when the discovery burst transmission window is enabled, a total number of candidate SSB indices is larger than 64. Therefore, information of 6 bits or more indicating SSB indices for FR2 may be required.

The increase in the amount of information that can be assumed above makes it difficult, when information bits are individually allocated, to design the SS/PBCH block so that the payload size of PBCH does not exceed 32 bits and the number of sequences of PBCH DMRS does not exceed 8 in FR3.

• Overview of Proposed Technology

In the technology of the present disclosure, one field is configured by combining two or more different fields (e.g., second information and third information) specifying configuration information included in MIB. An index (e.g., first information) of one field specifies corresponding two or more pieces of configuration information. The combination is configured so as not to specify an unnecessary state (e.g., reserved), it is possible to reduce the number of bits or to insert additional information into MIB.

In addition, in another technology of the present disclosure, parameters that can be transmitted by MIB described above is transmitted by using two types of MIBs of first MIB and second MIB. The second MIB is transmitted in an SS/PBCH block different from an SS/PBCH block in which the first MIB is transmitted. Alternatively, the second MIB is transmitted on secondary PBCH. Alternatively, the second MIB is transmitted in DCI.

<<Exemplary configuration of devices>>

<Exemplary configuration of base station apparatus>

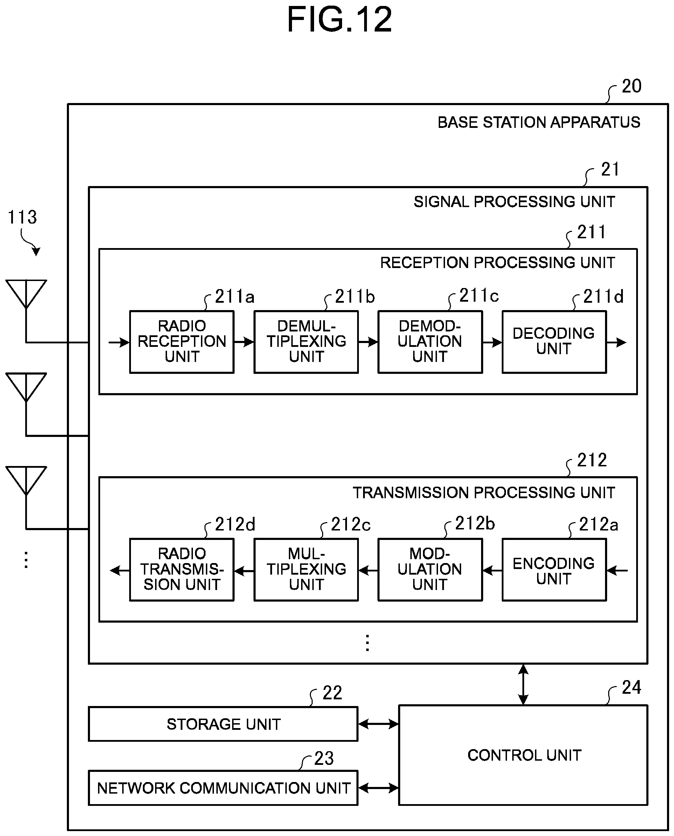

Next, a configuration of the base station apparatus 20 will be described. FIG. 12 is a diagram illustrating an exemplary configuration of the base station apparatus 20 according to an embodiment of the present disclosure. The base station apparatus 20 is a communication device (radio system) that wirelessly communicates with the terminal device 40. The base station apparatus 20 is a type of information processing device.

The base station apparatus 20 includes a signal processing unit 21, a storage unit 22, a network communication unit 23, and a control unit 24. Note that the configuration illustrated in FIG. 12 represents a functional configuration, and a hardware configuration may be different from the functional configuration. Furthermore, the functions of the base station apparatus 20 may be distributed in a plurality of physically separated devices for implementation.

The signal processing unit 21 is a wireless communication interface that wirelessly communicates with other communication devices (e.g., the terminal device 40 and another base station apparatus 20). The signal processing unit 21 operates under the control of the control unit 24. Note that the signal processing unit 21 may support a plurality of radio access systems. For example, the signal processing unit 21 may support both of NR and LTE. The signal processing unit 21 may support another cellular communication system such as W-CDMA or cdma2000. Furthermore, the signal processing unit 21 may support a wireless LAN communication system in addition to the cellular communication system. As a matter of course, the signal processing unit 21 may only correspond to one radio access system.

The signal processing unit 21 includes a reception processing unit 211, a transmission processing unit 212, and an antenna 113. The signal processing unit 21 may include a plurality of the reception processing units 211, transmission processing units 212, and antennas 113. Note that when the signal processing unit 21 supports the plurality of radio access systems, the units of the signal processing unit 21 can be individually configured for each of the radio access systems. For example, if the base station apparatus 20 supports NR and LTE, the reception processing unit 211 and the transmission processing unit 212 may be configured separately for NR and LTE.

The reception processing unit 211 processes the uplink signal received via the antenna 113. The reception processing unit 211 includes a radio reception unit 211a, a demultiplexing unit 211b, a demodulation unit 211c, and a decoding unit 211d.

The radio reception unit 211a performs, on the uplink signal, down conversion, removal of an unnecessary frequency component, control of an amplification level, quadrature demodulation, conversion to a digital signal, removal of a guard interval, and extraction of a frequency domain signal by fast Fourier transform, or the like. For example, it is assumed that the radio access system of the base station apparatus 20 is a cellular communication system such as LTE. At this time, the demultiplexing unit 211b demultiplexes an uplink channel, such as a physical uplink shared channel (PUSCH) and physical uplink control channel (PUCCH), and an uplink reference signal, from a signal output from the radio reception unit 211a. The demodulation unit 211c applies a modulation method such as binary phase shift keying (BPSK) or quadrature phase shift keying (QPSK) to a modulated symbol in the uplink channel to demodulate the received signal. The modulation method used by the demodulation unit 211c may employ multi-level QAM such as 16 quadrature amplitude modulation (QAM), 64QAM, or 256QAM. The decoding unit 211d performs decoding processing on encoded bits in the uplink channel demodulated. Decoded uplink data and uplink control information are output to the control unit 24.

The transmission processing unit 212 performs transmission processing for downlink control information and downlink data. The transmission processing unit 212 includes an encoding unit 212a, a modulation unit 212b, a multiplexing unit 212c, and a radio transmission unit 212d.

The encoding unit 212a performs encoding of the downlink control information and the downlink data that are input from the control unit 24, by using an encoding method such as block coding, convolutional coding, or turbo coding. The modulation unit 212b modulates encoded bits output from the encoding unit 212a by using a predetermined modulation method such as BPSK, QPSK, 16QAM, 64QAM, or 256QAM. The multiplexing unit 212c allocates a modulated symbol and a downlink reference signal that are multiplexed for each channel, in a predetermined resource element. The radio transmission unit 212d performs various types of signal processing on a signal from the multiplexing unit 212c. For example, the radio transmission unit 212d performs processing such as conversion to the time domain by using fast Fourier transform, addition of the guard interval, generation of a baseband digital signal, conversion to an analog signal, quadrature modulation, up-conversion, removal of an unnecessary frequency component, and amplification of power. A signal generated by the transmission processing unit 212 is transmitted from the antenna 113.

The storage unit 22 is a data readable/writable storage device such as DRAM, SRAM, a flash memory, or hard disk. The storage unit 22 functions as storage means of the base station apparatus 20.

The network communication unit 23 is a communication interface for communication with another device (e.g., another base station apparatus 20). For example, the network communication unit 23 is a local area network (LAN) interface such as a network interface card (NIC). The network communication unit 23 may be a universal serial bus (USB) interface including a USB host controller, a USB port, and the like. Furthermore, the network communication unit 23 may be a wired interface or a wireless interface. The network communication unit 23 functions as network communication means of the base station apparatus 20. The network communication unit 23 communicates with the another device under the control of the control unit 24.

The control unit 24 is a controller that controls each unit of the base station apparatus 20. The control unit 24 is implemented by a processor such as a Central Processing Unit (CPU) or a Micro Processing Unit (MPU). For example, the control unit 24 is implemented by executing various programs stored in the storage device in the base station apparatus 20 by the processor, with a random access memory (RAM) or the like as a working area. In addition, the control unit 24 may be implemented by an integrated circuit such as an application specific integrated circuit (ASIC) or a field programmable gate array (FPGA). The CPU, MPU, ASIC, and FPGA can all be regarded as the controllers.

<Exemplary configuration of terminal device>

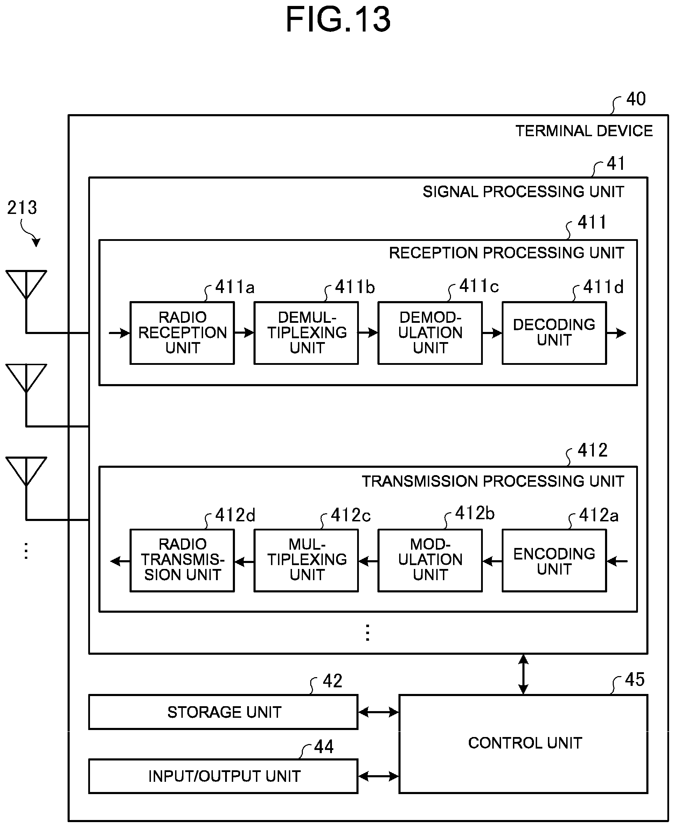

Next, a configuration of the terminal device 40 will be described. FIG. 13 is a diagram illustrating an exemplary configuration of the terminal device 40 according to an embodiment of the present disclosure. The terminal device 40 is a communication device (radio system) that wirelessly communicates with the base station apparatus 20. Furthermore, the terminal device 40 is a type of information processing device.

The terminal device 40 includes a signal processing unit 41, a storage unit 42, an input/output unit 44, and a control unit 45. Note that the configuration illustrated in FIG. 13 represents a functional configuration, and a hardware configuration may be different from the functional configuration. Furthermore, the functions of the terminal device 40 may be distributed in a plurality of physically separated configurations for implementation.

The signal processing unit 41 is a wireless communication interface that wirelessly communicates with other communication devices (e.g., the base station apparatus 20 and another terminal device 40). The signal processing unit 41 operates under the control of the control unit 45. The signal processing unit 41 supports one or more radio access systems. For example, the signal processing unit 41 supports both of NR and LTE. The signal processing unit 41 may support another radio access system such as W-CDMA (registered trademark) or cdma2000 (registered trademark).

The signal processing unit 41 includes a reception processing unit 411, a transmission processing unit 412, and an antenna 213. The signal processing unit 41 may include a plurality of the reception processing units 411, transmission processing units 412, and antennas 213. Note that when the signal processing unit 41 supports the plurality of radio access systems, the units of the signal processing unit 41 can be individually configured for each of the radio access systems. For example, the reception processing units 411 and the transmission processing units 412 may be configured individually for LTE and NR. The configurations of the reception processing unit 411 and transmission processing unit 412 are similar to those of the reception processing unit 211 and transmission processing unit 212 of the base station apparatus 20.

The storage unit 42 is a data readable/writable storage device such as DRAM, SRAM, a flash memory, or hard disk. The storage unit 42 functions as storage means of the terminal device 40.

The input/output unit 44 is a user interface for exchanging information with the user. For example, the input/output unit 44 is an operation device, such as a keyboard, mouse, operation keys, or touch screen, through which various operations are performed by the user. Alternately, the input/output unit 44 is a display device such as a liquid crystal display or organic electroluminescence (EL) display. The input/output unit 44 may be an acoustic device such as a speaker or buzzer. Furthermore, the input/output unit 44 may be a lighting device such as a light emitting diode (LED) lamp. The input/output unit 44 functions as input/output means (input means, output means, operation means, or reporting means) of the terminal device 40.

The control unit 45 is a controller that controls each unit of the terminal device 40. The control unit 45 is implemented by a processor such as CPU or MPU. For example, the control unit 45 is implemented by executing various programs stored in the storage device in the terminal device 40 by the processor, with RAM or the like as a working area. Note that the control unit 45 may be implemented by an integrated circuit such as ASIC or FPGA. The CPU, MPU, ASIC, and FPGA can all be regarded as the controllers.

<<Technical features>>

As described above, the upper limits of the number of bits that can be carried by the PBCH payload and MIB are defined, and therefore, it is required to define limited or compressed system information.

<Configuration of MIB for FR3>

Therefore, in the embodiment of the present disclosure, a SS/PBCH block for FR3 that is different from the SS/PBCH blocks for FR1 and FR2 is assumed. Specifically, at least the configuration of MIB carried in the SS/PBCH block for FR3 is different from the configuration of the MIB in the SS/PBCH block for FR1 or FR2.

<PDCCH configuration>

In an example of the configuration of the MIB for FR3, information indicated by an PDCCH configuration (pdcch-ConfigSIB1) is different from those in the PDCCH configurations (pdcch-ConfigSIB1) included in the MIBs for FR1 and FR2.

In a specific example of the information indicated by the PDCCH configuration (pdcch-ConfigSIB1) for FR3, the PDCCH configuration indicates one index. The index of the PDCCH configuration indicates a combination of an index of the configuration of CORESET #0 and an index of the configuration of the PDCCH monitoring occasion for TypeO-PDCCH CSS set. In other words, the terminal device recognizes a combination of the index of the configuration of CORESET #0 and the index of the configuration of the PDCCH monitoring occasion for TypeO-PDCCH CSS set, from the index of the PDCCH configuration included in MIB received. In other words, the base station apparatus causes the terminal device to recognize the combination of the index of the configuration of CORESET #0 and the index of the configuration of the PDCCH monitoring occasion for TypeO-PDCCH CSS set, by using the index of the PDCCH configuration included in MIB to be transmitted.

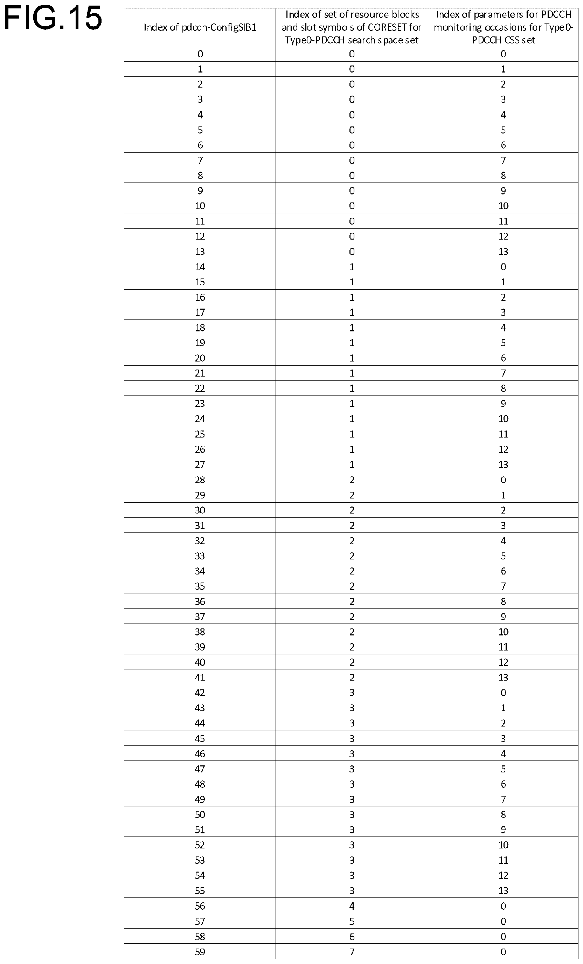

FIG. 15 is an exemplary table used for PDCCH configuration, for {SS/PBCH block, PDCCH} SCS of {120, 120} kHz. In the table of FIG. 15, 60 combinations of the index of the configuration of CORESET #0 (controlResourceSetZero) and the index of the configuration of the PDCCH monitoring occasion for TypeO-PDCCH CSS set (searchSpace Zero) are defined. The configuration of the CORESET #0 and the configuration of the PDCCH monitoring occasion for TypeO-PDCCH CSS set, reported by MIB, are reported by using the index of the PDCCH configuration (pdcch-ConfigSIB1), and the tables shown in FIGS. 15, 7J, 8B, and 8E. The index indicated by the PDCCH configuration (pdcch-ConfigSIB1) specifies the index of the configuration of CORESET #0 and the index of the configuration of the PDCCH monitoring occasion for TypeO-PDCCH CSS set.

Here, the table of FIG. 15 includes available combinations of the configuration of CORESET #0 and the configuration of the PDCCH monitoring occasion for TypeO-PDCCH CSS set. For example, the table includes no combination of the indices 0 to 3 of the configuration of CORESET #0, and the configuration of the PDCCH monitoring occasion for TypeO-PDCCH CSS set. The indices 0 to 3 indicate the multiplexing pattern 1 between the SS/PBCH block and the CORESET, and the configuration of the PDCCH monitoring occasion indicates the multiplexing pattern 3 between the SS/PBCH block and CORESET.

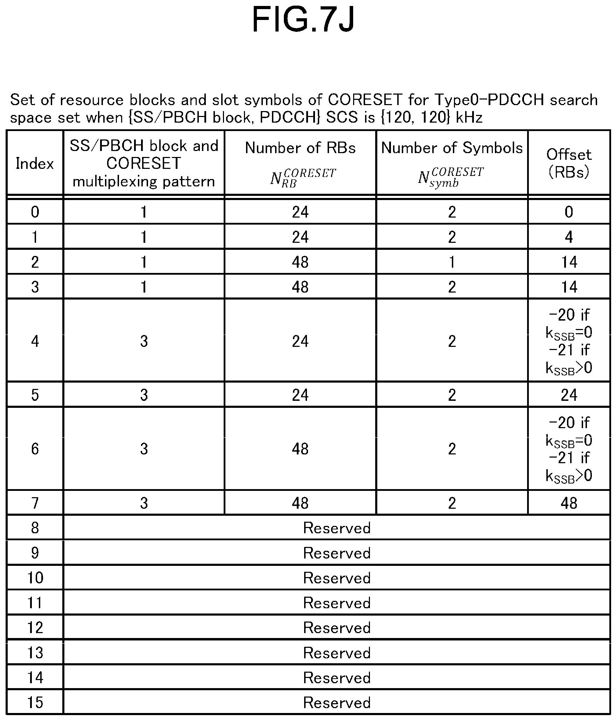

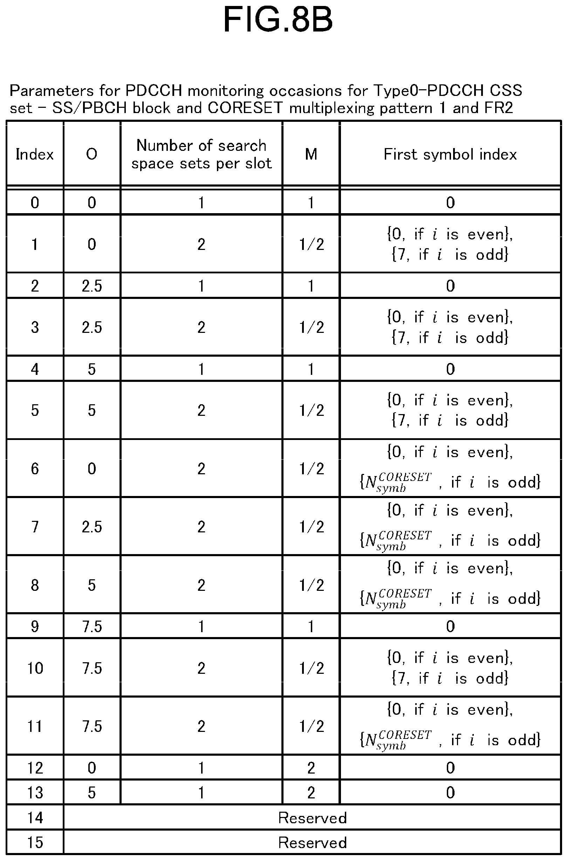

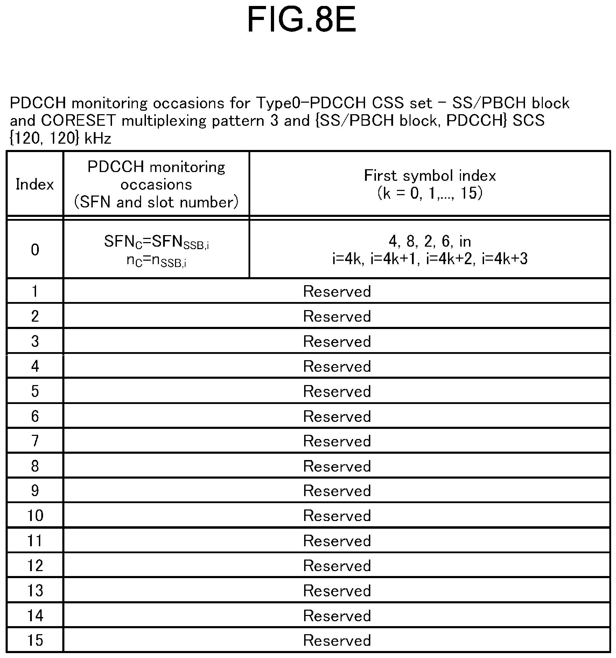

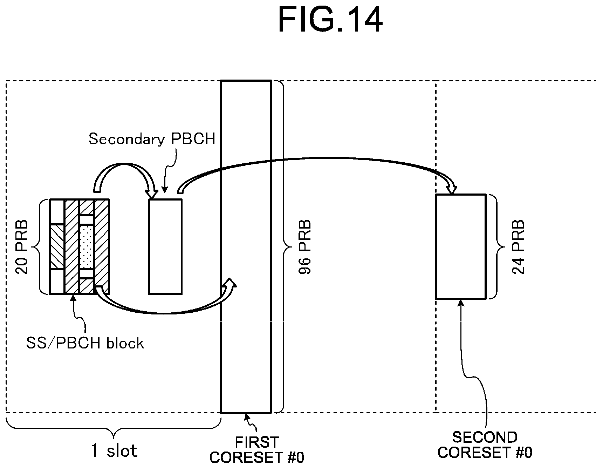

Furthermore, here, the table of FIG. 15 does not include indices that are represented as Reserved in FIGS. 7J, 8B, and 8E. Specifically, indices 8 to 15 in FIG. 7J, indices 14 and 15 in FIG. 8B, and indices 1 to 15 in FIG. 8E are not included in the table in FIG. A. In other words, the table of FIG. 15 includes 60 combinations that are represented by all combinations of four states of the multiplexing pattern 1 between the SS/PBCH block and CORESET in FIG. 7J and 14 states in FIG. 8B, and combinations of four states of the multiplexing pattern 3 between the SS/PBCH block and CORESET and one state in FIG. 8E.

Limiting the patterns of these combinations can reduce the number of bits required for reporting the PDCCH configuration. Specifically, only 60 combinations are defined in the table of FIG. 15. Therefore, the PDCCH configuration for FR3 can represent the table of FIG. 15 in 6 bits, and can be reduced by 2 bits as compared with the 8-bit PDCCH configurations for FR1 and FR2. While 64 combinations can be represented in 6 bits, 60 combinations are necessary for the table of FIG. 15. In other words, the remaining four indices may be indices for representing other configurations (other parameters described above or below) or may be Reserved.

In addition, the table to be referenced to that is used for the configuration of CORESET #0 and the configuration of the PDCCH monitoring occasion for TypeO-PDCCH CSS set may be the same as the table for FR2, or a table specific to FR3 may be defined.

In a specific example of the information indicated by the PDCCH configuration (pdcch-ConfigSIB1) for FR3, the PDCCH configuration indicates one index. The index of the PDCCH configuration specifies parameters related to PDCCH (SS/PBCH block and CORESET multiplexing pattern, the number of resource blocks (RBs), the number of symbols, resource block offset from SS/PBCH block, for CORESET #0, and value O specifying start slot of PDCCH monitoring occasion, the number of search space sets in slot, value M indicating a relationship between SS/PBCH block and PDCCH monitoring occasion, and first symbol index, for TypeO-PDCCH CSS set) without referencing to other tables.

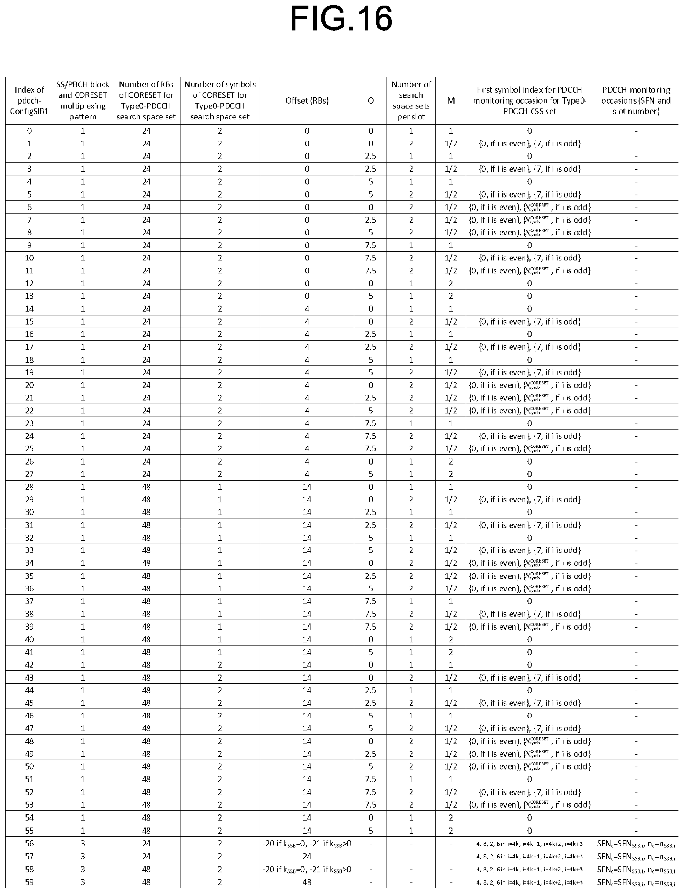

FIG. 16 is an exemplary table used for PDCCH configuration for {SS/PBCH block, PDCCH} SCS of {120, 120} kHz. In the table of FIG. 16, 60 combinations are defined. The 60 combinations include SS/PBCH block and CORESET multiplexing pattern, the number of resource blocks (RBs), the number of symbols, resource block offset from SS/PBCH block, for CORESET #0, and value O specifying start slot of PDCCH monitoring occasion, the number of search space sets in slot, value M indicating a relationship between SS/PBCH block and PDCCH monitoring occasion, and first symbol index, for TypeO-PDCCH CSS set. These parameters related to PDCCH are specified by the index indicated by the PDCCH configuration (pdcch-ConfigSIB1).

Defining a table different from a parameter set table related to PDCCH for FR2, as illustrated in FIG. 16, allows definition of parameters specific to FR3, without affecting the terminal device 40 supporting FR2.

In a specific example of the information indicated by the PDCCH configuration (pdcch-ConfigSIB1) for FR3, the PDCCH configuration indicates one index. The one index of the PDCCH configuration further indicates SCS of PDCCH, in addition to the combination of the index of the configuration of CORESET #0 and the index of the configuration of the PDCCH monitoring occasion for TypeO-PDCCH CSS set.

The SCS of PDCCH is associated with the multiplexing pattern of the SS/PBCH block and CORESET. For example, when the SCSs of the SS/PBCH block and PDCCH are the same, the multiplexing pattern 2 is not applied, and the multiplexing pattern 3 can be applied. When the SCS of the SS/PBCH block is twice or 112 of the SCS of the PDCCH, the multiplexing pattern 3 is not applied, and the multiplexing pattern 2 can be applied. When the SCS of the SS/PBCH block is 4 times or more or 1/4 or less of the SCS of the PDCCH, neither of the multiplexing pattern 2 and 3 is not applied, and only the multiplexing pattern 1 is applied. Combining (associating) information related to these configurations and defining a table excluding an unavailable pattern, as one field, make it possible to further reduce the amount of information bit necessary for the SCS of the PDCCH and PDCCH configuration.

Note that, when non-cell defining SSB is indicated even when the number of bits of PDCCH configuration is reduced, the frequency position (GSCN) of cell defining SSB may be indicated as the number of bits of conventional PDCCH configuration,. In this configuration, the frequency position (GSCN) of the cell defining SSB is indicated by also using other information bits, in addition to the PDCCH configuration. Examples of the other information bits include information related to the unlicensed band, subCarrierSpacingCommon, spare, and the like. In a specific example, when the SS/PBCH block detected by $k_{SSB}$ is indicated as cell defining SSB, the 6-bit PDCCH configuration and 2-bit information related to the unlicensed band is indicated. Meanwhile, when the SS/PBCH block detected by $k_{SSB}$ is indicated as non-cell defining SSB, information reporting the frequency position of 8-bit cell defining SSB is indicated.

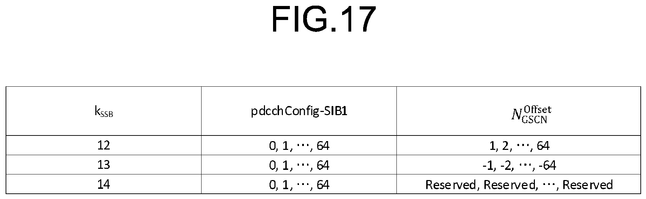

Alternatively, when the number of bits of PDCCH configuration is reduced, the range in which the frequency position (GSCN) of cell defining SSB can be reported may be reduced as well. In a specific example, when the number of bits of PDCCH configuration is reduced from 8 bits to 6 bits, the range in which the frequency position (GSCN) of cell defining SSB can be reported is reduced to a range from +64 to -64 as illustrated in FIG. 17.

<SCS and sub-carrier offset>

In an example of the configuration of the MIB for FR3, the following two pieces of information:

    (a) SCS of PDCCH for TypeO-PDCCH CSS set, and
    (b) sub-carrier offset between SS/PBCH block and CORESET #0

are specified by one index. In FR3, subCarrierSpacingCommon and ssb-SubcarrierOffset are not reported in separate fields, and a new field (e.g. SCSandSsb-SubcarrierOffset) is included in MIB. In other words, the terminal device recognizes a combination of (a) the SCS of PDCCH for TypeO-PDCCH CSS set and (b) the sub-carrier offset between SS/PBCH block and CORESET #0, from one index (e.g. SCSandSsb-SubcarrierOffset) contained in the received MIB. In other words, the base station apparatus causes the terminal device to recognize a combination of (a) the SCS of PDCCH for TypeO-PDCCH CSS set and (b) the sub-carrier offset between SS/PBCH block and CORESET #0 by using one index (e.g. SCSandSsb-SubcarrierOffset) contained in the MIB to be transmitted.

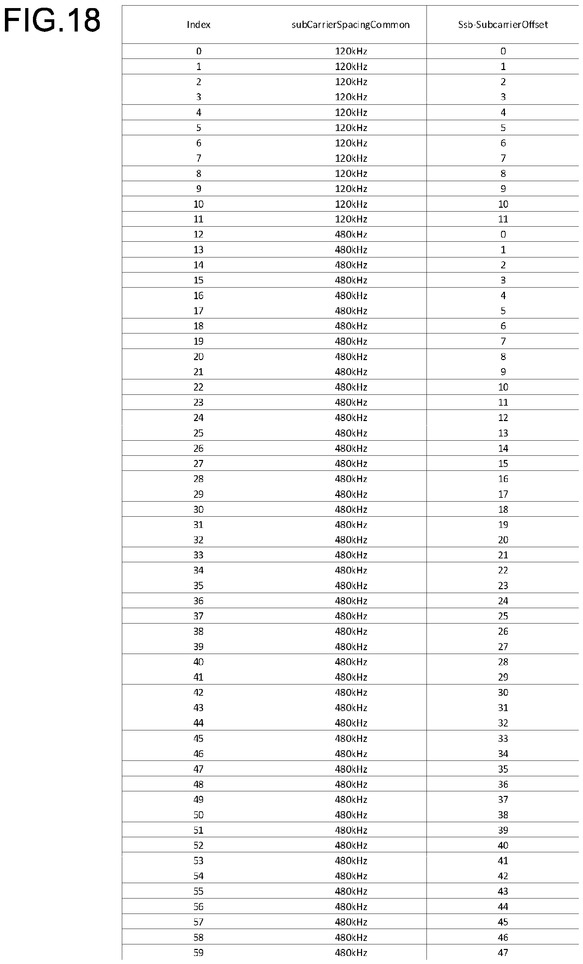

FIG. 18 is an exemplary table illustrating combinations of subCarrierSpacingCommon and ssb-SubcarrierOffset for the SS/PBCH block of 120 kHz. The allowed maximum number of the sub-carrier offset when the SCS of {SS/PBCH block, PDCCH} is {120, 120} kHz is 12, and the allowed maximum number of the sub-carrier offset when the SCS of {SS/PBCH block, PDCCH} is {120, 480} kHz is 48. Representing these related parameters by one index makes it possible to configure 60 patterns, and reporting can be performed in 6 bits. In conventional individual reporting, 1 bit is required for reporting SCS and 6 bits are required for reporting the sub-carrier offset. Compared with a conventional individual reporting method, the amount of information can be reduced by 1 bit.

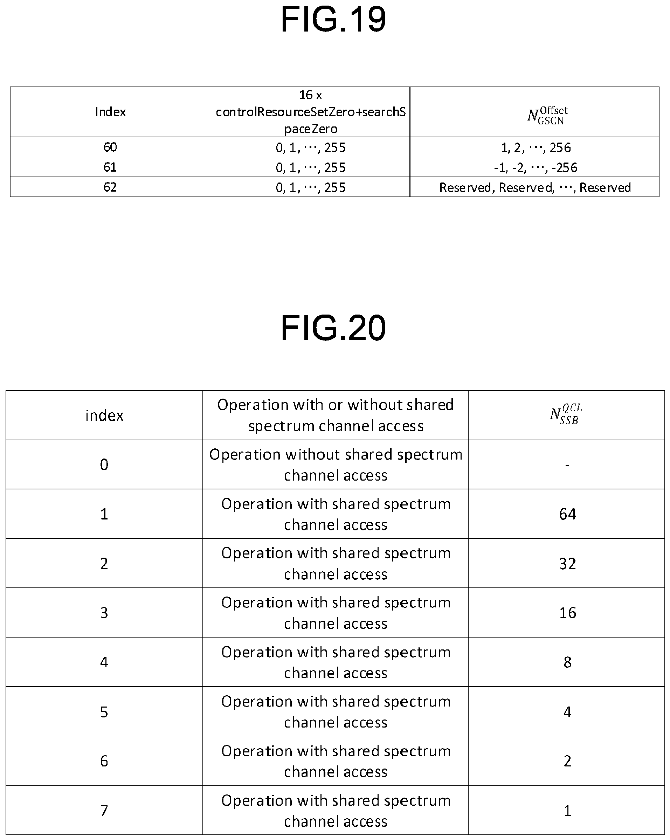

Note that, also in FIG. 18, it is possible to report whether the SS/PBCH block is the cell defining SSB (SS/PBCH block having CORESET for the TypeO-PDCCH CSS set) or the non-cell defining SSB (SS/PBCH block having no CORESET for the TypeO-PDCCH CSS set), by using the remaining indices (60 to 63) that can be reported in 6 bits. In other words, when it is reported that the index is 61 or more, the terminal device recognizes that no CORESET for the TypeO-PDCCH CSS set is configured, from the detected MIB. In other words, the base station apparatus can cause the terminal device to recognize that no CORESET for the TypeO-PDCCH CSS set is configured from MIB, by reporting that the index is 61 or more. Then, the frequency position (global synchronization channel number; GSCN) of the most recent cell-defining SSB in a frequency direction can be specified by the index and pdcchConfig-SIB1 defined in FIG. 19. Furthermore, when the index is specified as 63, it is possible to report that no cell-defining SSB is within the range where the CSCN can be specified.

In other words, one new field (e.g. SCSandSsb-SubcarrierOffset) reports the SCS of PDCCH for TypeO-PDCCH CSS set, the sub-carrier offset $k_{SSB}$ between the SS/PBCH block and CORESET #0, and the frequency position of the cell defining SSB.

Note that FIG. 18 has illustrated the combination of subCarrierSpacingCommon and ssb-SubcarrierOffset when the SS/PBCH block is at 120 kHz where the SCS of PDCCH for TypeO-PDCCH CSS set is configured to be 120 kHz or 480 kHz. However, the present method, not limited to this combination, can be applied when the SCS of PDCCH for TypeO-PDCCH CSS set is configured to be {120 kHz, 960 kHz}, {480 kHz, 960 kHz}, and {120 kHz, 480 kHz, 960 kHz}, and a similar effect can be provided.

information related to unlicensed band>

Examples of the information related to the unlicensed band include information indicating whether operation is the licensed band operation (operation without shared spectrum channel access, cell without CCA) or the unlicensed band operation (operation with shared spectrum channel access, cell with CCA), and information indicating the number $N_{SSB}^{QCL}$ of SSB QCLs. In FR3, one table including multiple indices each specifying a combination of these pieces of information can be defined. One table is used to report two configurations related to the unlicensed band by using an index of one new field. In other words, the terminal device recognizes, from one index (an index specifying a combination of information indicating whether the operation is the licensed band operation or the unlicensed band operation, and information indicating the number of SSB QCLs) included in the MIB received, a combination of the information indicating whether operation is the licensed band operation (operation without shared spectrum channel access, cell without CCA) or the unlicensed band operation (operation with shared spectrum channel access, cell with CCA), and the information indicating the number $N_{SSB}^{QCL}$ of SSB QCLs. In still other words, the base station apparatus causes the terminal device to recognize a combination of the information indicating whether operation is the licensed band operation (operation without shared spectrum channel access, cell without CCA) or the unlicensed band operation (operation with shared spectrum channel access, cell with CCA), and the information indicating the number $N_{SSB}^{QCL}$ of SSB QCLs, by using one index (an index specifying a combination of information indicating whether the operation is the licensed band operation or the unlicensed band operation, and information indicating the number of SSB QCLs) included in the MIB to be transmitted.

FIG. 20 is an exemplary table used for configuration related to the unlicensed band. One index for configuration related to the unlicensed band specifies both of the information indicating whether operation is the licensed band operation (operation without shared spectrum channel access, cell without CCA) or the unlicensed band operation (operation with shared spectrum channel access, cell with CCA), and the information indicating the number $N_{SSB}^{QCL}$ of SSB QCLs. No discovery burst transmission window is required in the licensed band operation, and therefore, the number $N_{SSB}^{QCL}$ of SSB QCLs is not specified. Meanwhile, the discovery burst transmission window is required in the unlicensed band operation, and therefore, the number $N_{SSB}^{QCL}$ of SSB QCLs is also specified.

As illustrated in FIG. 20, eight states of these combinations can be specified, and reporting can be performed in 3 bits. In the individual reporting, 1 bit is required for reporting whether the operation is the licensed band operation or the unlicensed band operation, and 3 bits are required for reporting the number $N_{SSB}^{QCL}$ of SSB QCLs. Therefore, one field configuration allows reduction of one bit.

Note that the information related to the unlicensed band may be further combined with information indicating the candidate SSB index so as to be defined as one table.

<Second MIB >

In another embodiment of the present disclosure, the MIB for FR3 is divided into the first MIB and the second MIB. As the SS/PBCH block for FR3, a first SS/PBCH block carrying the first MIB and a second SS/PBCH block carrying the second MIB can be defined.

Configurations of the first MIB and the second MIB are different. The first and second SS/PBCH blocks are transmitted in a predetermined bandwidth. The SS/PBCH block disposed in the predetermined bandwidth carries the first MIB or the second MIB. The terminal device receives both of the SS/PBCH blocks to acquire information of all the MIBs. The base station apparatus provides information of all the MIBs to the terminal device by transmitting both SS/PBCH blocks.

The SS/PBCH block in the present embodiment includes at least information indicating whether the MIB is the first MIB or the second MIB.

The first and second SS/PBCH blocks are multiplexed on the time or frequency axis.

An example of the multiplexing of the first and second SS/PBCH blocks includes multiplexing on the time axis.

In a specific example, the first SS/PBCH block is allocated to a radio frame with an odd SFN, and the second SS/PBCH block is allocated to a radio frame with an even SFN. Note that in this configuration, the SFN is information that implicitly indicates whether the MIB is the first MIB or the second MIB.

In another specific example, the first SS/PBCH block is allocated to a preceding half-frame, and the second SS/PBCH block is allocated to a succeeding half-frame. Note that in this configuration, the half-frame index is information that implicitly indicates whether the MIB is the first MIB or the second MIB.

An example of the multiplexing of the first and second SS/PBCH blocks includes multiplexing on the frequency axis.

In a specific example, the first and second SS/PBCH blocks are transmitted at different frequencies in a band of the initial BWP. In this configuration, the first and second MIBs preferably include a common PDCCH configuration. Therefore, it is possible to recognize the initial BWP upon acquiring either of the MIBs.

In another specific example, the first SS/PBCH block is transmitted in a primary cell, and the second SS/PBCH block is transmitted in a secondary cell. The second MIB can be configured using an area of MIB of the SS/PBCH block operated as the secondary cell.

In another specific example, the first SS/PBCH block is the cell defining SSB, and the second SS/PBCH block is the non-cell defining SSB.

The first MIB may include information reporting the position (frequency and/or time) of the SS/PBCH block carrying the second MIB. The second MIB may include information reporting the position of an SS/PBCH block carrying the first MIB. The terminal device first detects the SS/PBCH block including any of the MIBs, and receives the first MIB or the second MIB. On the basis of information, included in an MIB, of the position of an SS/PBCH block carrying the other MIB, the terminal device attempts to receive the other SS/PBCH block. Then, the terminal device that has received both the first MIB and the second MIB attempts to receive SIB.

Note that when the first or second MIB can be received but the other MIB cannot be received within a predetermined time, the terminal device discards the information of the first or second MIB which has been received. The predetermined time may be defined by a standard, may be set in an upper layer (e.g., the predetermined time may be set by the configuration information included in an RRC message transmitted from the base station apparatus), or may be defined in manufacturing the terminal device.

<Secondary PBCH>

As another embodiment of the present disclosure, a method of transmitting a secondary PBCH to transmit MIB to the terminal device 40 supporting FR3 can be considered. The secondary PBCH includes at least part of minimum system information (MSI) for the terminal device supporting FR3. The Secondary PBCH includes the second MIB.

In addition, the physical configuration and information of the secondary PBCH will be described later.

Here, an indication method for secondary PBCH will be described. FIG. 14 is a diagram illustrating the indication method for secondary PBCH according to an embodiment of the present disclosure.

More specifically, the presence of the secondary PBCH is indicated by, for example, a spare bit (reserved bit, extension bit) contained in the PBCH payload or MIB. For example, the presence of the secondary PBCH is indicated by a 1-bit spare bit included in the MIB. When transmitting the secondary PBCH corresponding to SSB, the base station apparatus 20 uses the spare bit to indicate the presence of the secondary PBCH. The terminal device 40 determines whether the secondary PBCH is transmitted, according to the spare bit. When the transmission is indicated by the spare bit, the terminal device 40 attempts to receive the secondary PBCH.

A secondary PBCH resource candidate may be indicated by a combination of the periodicity of the secondary PBCH, a time offset (frame offset, half-frame offset, slot offset, etc.) from an SSB resource or a first CORESET #0 resource and TypeO-PDCCH CSS set resource, and/or a frequency offset (PRB offset, sub-carrier offset).

Note that the secondary PBCH resource candidate may be overwritten with RRC signaling (e.g., any System Information (SIB-X), RRCSetup message, RRCReconfiguration message). In other words, a secondary PBCH resource A to a secondary PBCH resource D are configured by RRC signaling, and the second terminal device 40B references to the positions of the configured secondary PBCH resource A to the secondary PBCH resource D after receiving the RRC signaling. Meanwhile, for the secondary PBCH resource candidates, default positions are provided, and before configuration by RRC signaling, the second terminal device 40B references to default positions of the secondary PBCH resources A to the secondary PBCH resource D.

Note that the base station apparatus 20 reports the actual transmission position of the secondary PBCH to the terminal device 40. This report may be used for PDSCH rate-matching performed by the terminal device 40. Specifically, this configuration allows the terminal device 40 to recognize the secondary PBCH resource. Upon receiving PDSCH, the terminal device 40 can attempt to perform decoding while avoiding the secondary PBCH resource, improving a PDSCH reception characteristic. Note that this report may be provided as information about the position of the secondary PBCH that is not actually transmitted.

As a method of providing the report, for example, there is a method using ratematchPattern. For example, the base station apparatus 20 configures a resource element in which the secondary PBCH is allocated, as a rate match pattern, for the first terminal device 40A after RRC connection. The first terminal device 40A can recognize that the resource specified by the ratematchPattern is not a physical channel addressed to the first terminal device itself. Alternatively, when the cell to which the first terminal device 40A is connected is a TDD cell, there is a method of providing the report by using a UL symbol or a Flexible symbol. In this case, the secondary PBCH is allocated to a resource indicated as the UL symbol by TDD-DL-UL-config reported in the SIB to the first terminal device 40A. Furthermore, as the method of providing the report, for example, there is a method using SSBBurstPosition (or SSBPositionsInBurst). In this case, for example, the secondary PBCH is allocated to a resource element to which SSB is not actually transmitted. When SSBBurstPosition is used as the method of providing the report, the SSBBurstPosition (or SSBPositionsInBurst) for the SS/PBCH block (SSB) containing primary PBCH, and the SSBBurstPosition (or SSBPositionsInBurst) indicating the allocation of the secondary PBCH may be distinguished from each other and included in the RRC signaling used for the report, as (different IE).

<Exemplary configuration of secondary PBCH >

Here, an exemplary physical configuration of the secondary PBCH described above will be described.

(Configuration)

The secondary PBCH includes an encoded additional MIB (MIB2, MIB for reduced capability NR device, hereinafter also referred to as second MIB), and DMRS used for demodulation of secondary PBCH payload.

As described above, the second MIB includes some of the parameters in MIB described above. Furthermore, the secondary PBCH (second MIB, secondary PBCH payload, and/or physical parameters of secondary PBCH) may include the following information.

- Information about access barring to a predetermined the terminal device 40
- Information about QCL with SIB (Type 0-PDCCH DMRS and PDSCH DMRS)
- Extension bit for forward compatibility (spare bit and reserved bit);
- information about an initial DL bandwidth part (or default bandwidth part) for the second terminal device 40B
- TDD configuration (information about uplink, downlink, and flexible symbol)
- Information indicating whether SSB is the non-cell defining SSB and the frequency position of the cell-defining SSB
- Information about paging of the second terminal device 40B
- Information about cell selection for the second terminal device 40B
- Information about DRX of the second terminal device 40B
- Information about extended SFN (e.g., hyper SFN)
- The number of transmission antenna ports for the secondary PBCH and SIB.

The Physical parameters of the secondary PBCH include a CRC scrambling mask of the secondary PBCH, a scrambling sequence of the secondary PBCH payload, a resource position of the secondary PBCH, and the like. Specifically, the number of transmission antenna ports of the secondary PBCH and the information of the extended SFN are reported corresponding to the pattern of the CRC scrambling mask of the secondary PBCH.

Note that some of the above-mentioned parameters that can be transmitted in the MIB may be included in SIB 1 instead of the secondary PBCH.

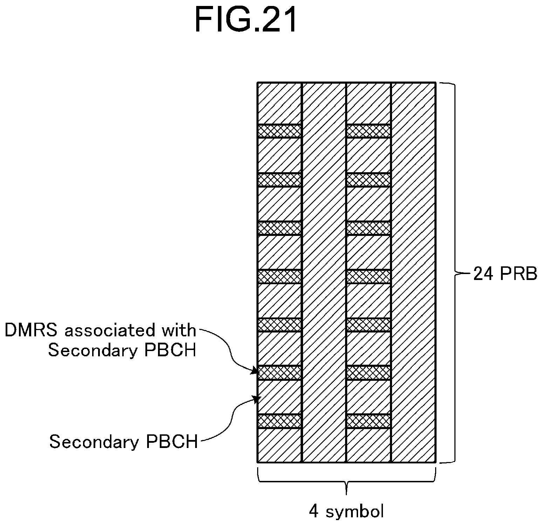

FIG. 21 is a diagram illustrating an exemplary configuration of the secondary PBCH according to an embodiment of the present disclosure. For example, the Secondary PBCH includes 24 PRBs or less (24 PRBs in FIG. 21) .

In the secondary PBCH, symbols are determined according to the amount of information and coding rate of the second MIB. In an example, the secondary PBCH includes 2 symbols, and a 24-bit second MIB is transmitted. When the amount of information transmitted on the secondary PBCH is small, the secondary PBCH may include one symbol. In addition, when the amount of information transmitted on the secondary PBCH is large or when a low coding rate is required, the secondary PBCH may include four symbols or seven symbols. Note that the number of symbols of the secondary PBCH may be reported from the SS/PBCH block.

As illustrated in FIG. 21, the secondary PBCH is transmitted together with a reference signal (DMRS) for demodulating the secondary PBCH. For example, DMRSs are allocated every 4 REs on the frequency axis. The secondary PBCH DMRS may not be included in all symbols. Meanwhile, the DMRS included in the first symbol reduces demodulation delay, and therefore, the secondary PBCH DMRS is preferably included in the first symbol. In the example of FIG. 21, DMRSs are allocated every 2 symbols. In the example of FIG. 21, the DMRSs are included in the first symbol and the third symbol, but are not included in the second symbol and the fourth symbol.

(Periodicity)

The secondary PBCH is allocated with the same periodicity as the periodicity of the SS/PBCH block or with a periodicity longer than the periodicity of the SS/PBCH block. In an example, in the initial cell selection, the secondary PBCH is allocated at the same periodicity as the periodicity of the SS/PBCH block. In the initial cell selection, the second terminal device 40B assumes that the secondary PBCH occurs with a periodicity of two radio frames (20 sub-frames, 20 msec).

Note that the periodicity of the secondary PBCH may be reported separately from the periodicity of the SS/PBCH block. Specifically, the periodicity of the secondary PBCH may be set using a parameter different from a parameter (SMTC: SSB Measurement Timing Configuration) specifying the periodicity of the SS/PBCH block.

In addition, the secondary PBCHs allocated at the same center frequency carry the same second MIB in a predetermined period. The predetermined period is 80 msec. Note that the predetermined period may be longer than 80 msec. The predetermined period may be, for example, 160 msec or 320 msec.

In addition, the number of SS/PBCHs and the number of secondary PBCHs in one burst may be different. In other words, information of the SSB actually transmitted (ssb-PositionsInBurst) and information of the secondary PBCH actually transmitted (SPBCH-PositionsInBurst) may be individually configured.

(Time/frequency resource)

The secondary PBCH and the SS/PBCH block are allocated by being frequency-multiplexed or being time-multiplexed. Hereinafter, a multiplexing method for the secondary PBCH and the SS/PBCH block will be described with five examples.

• Example 1

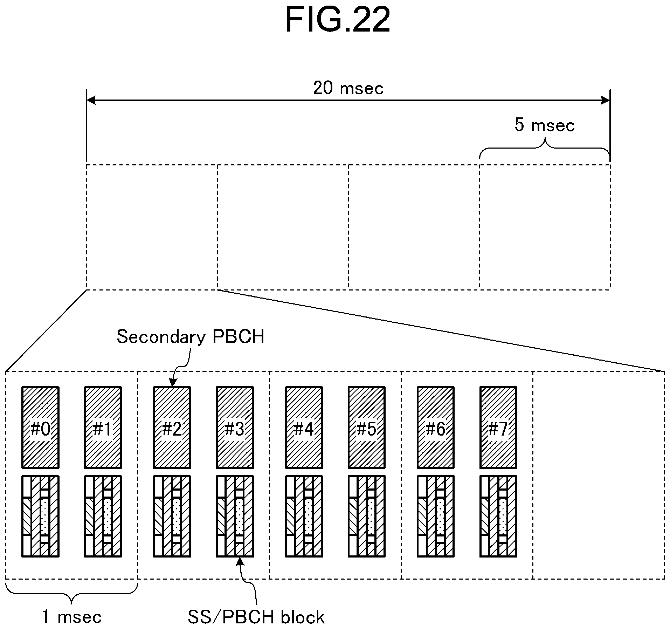

FIG. 22 is a diagram illustrating an exemplary multiplexing method for the secondary PBCH and the SS/PBCH block according to an embodiment of the present disclosure. FIG. 22 illustrates frequency-multiplexing of the SS/PBCH block and the secondary PBCH. In FIG. 22, the horizontal direction represents time, and the vertical direction represents frequency.

For example, the secondary PBCH is allocated to a different resource block in the same symbol as the corresponding SS/PBCH block. In the example of FIG. 22, the secondary PBCH is allocated to an upper side than the SS/PBCH block, in the resource block.

Note that allocation of the secondary PBCH is not limited to the example of FIG. 22, and for example, the secondary PBCH may be allocated to the resource block at a lower frequency than the SS/PBCH block. Note that the start (or the center of the resource block or the rear of the resource block) of the resource block to which the secondary PBCH is to be allocated may be indicated by the SS/PBCH block.

• Example 2

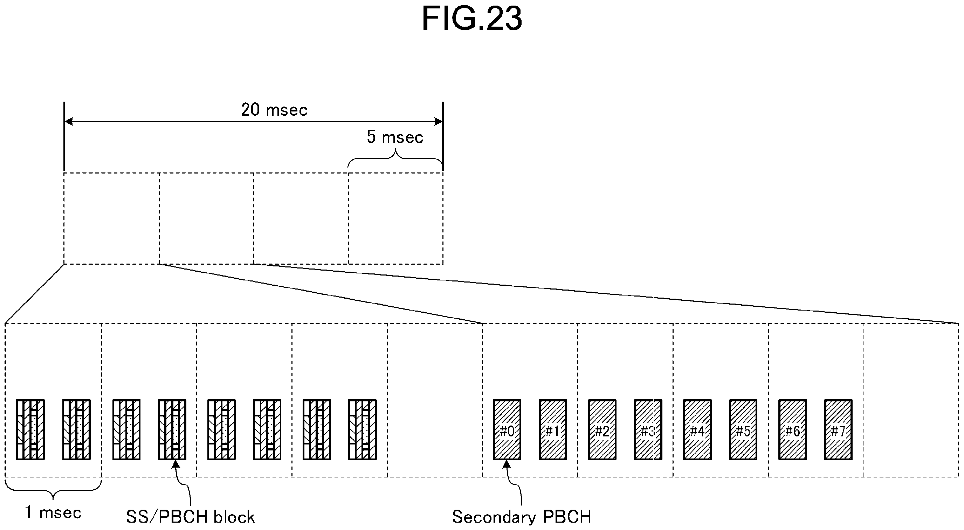

FIG. 23 is a diagram illustrating another exemplary multiplexing method for the secondary PBCH and the SS/PBCH block according to an embodiment of the present disclosure. FIG. 23 illustrates time-multiplexing of the SS/PBCH block and the secondary PBCH. In FIG. 23, the horizontal direction represents time, and the vertical direction represents frequency.

For example, the secondary PBCHs are included in a half-frame next to a half-frame in which an SS/PBCH block burst is included. In the example of FIG. 23, the SS/PBCH blocks are allocated to the first half-frame of the resource to which the SS/PBCH blocks are allocated, and the secondary PBCHs are allocated to the second half-frame. Note that the half-frame in which the secondary PBCHs are included may be the third or fourth half-frame. Note that the half-frame in which the secondary PBCHs are included may be indicated by the SS/PBCH blocks.

• Example 3

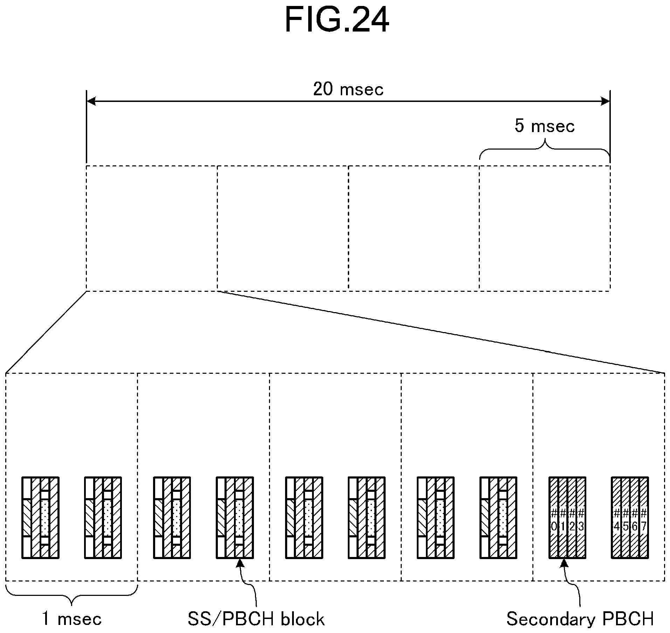

FIG. 24 is a diagram illustrating another exemplary multiplexing method for the secondary PBCH and the SS/PBCH block according to an embodiment of the present disclosure. FIG. 24 illustrates time-multiplexing of the SS/PBCH block and the secondary PBCH, and the secondary PBCH occupies one symbol. In FIG. 24, the horizontal direction represents time, and the vertical direction represents frequency.

When the secondary PBCH occupies one symbol, as illustrated in FIG. 24, the secondary PBCHs are included in a half-frame in which the SS/PBCH block burst is included. Specifically, the secondary PBCHs are allocated to the fifth sub-frame of the half-frame in which the SS/PBCH block burst is included. Secondary PBCHs corresponding to SS/PBCH block indices #0 to #3 are allocated to symbols #2, #3, #4, and #5, respectively, and secondary PBCHs corresponding to SS/PBCH block indices #4 to #7 are allocated to symbols #8, #9, #10, and #11, respectively.

• Example 4

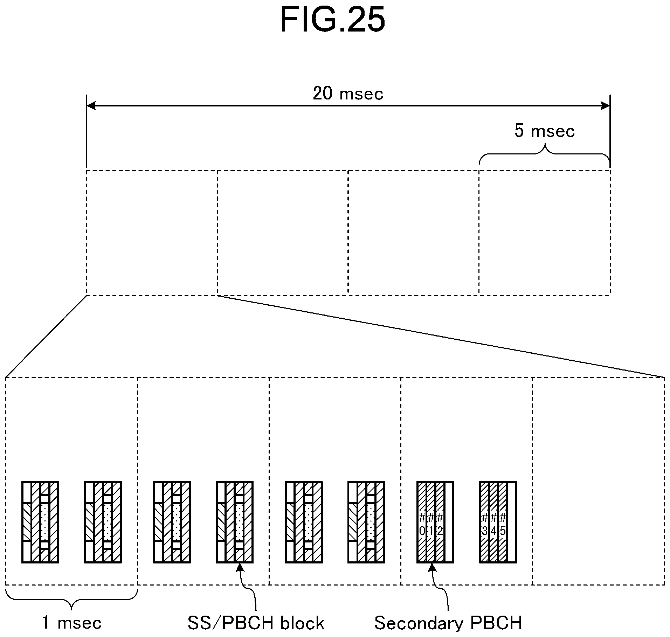

FIG. 25 is a diagram illustrating another exemplary multiplexing method for the secondary PBCH and the SS/PBCH block according to an embodiment of the present disclosure.

FIG. 25 illustrates time-multiplexing of the SS/PBCH block and the secondary PBCH, and the secondary PBCH occupies one symbol. In FIG. 25, the horizontal direction represents time, and the vertical direction represents frequency.

In another example of Example 3, some of the SS/PBCH blocks are not transmitted and the secondary PBCHs may be transmitted using the resources where the SS/PBCH blocks are not transmitted. In this configuration, as illustrated in FIG. 25, the SS/PBCH blocks #6 and #7 are not transmitted, and instead, six secondary PBCHs corresponding to SS/PBCH block indices #0 to #5 are transmitted.

• Example 5

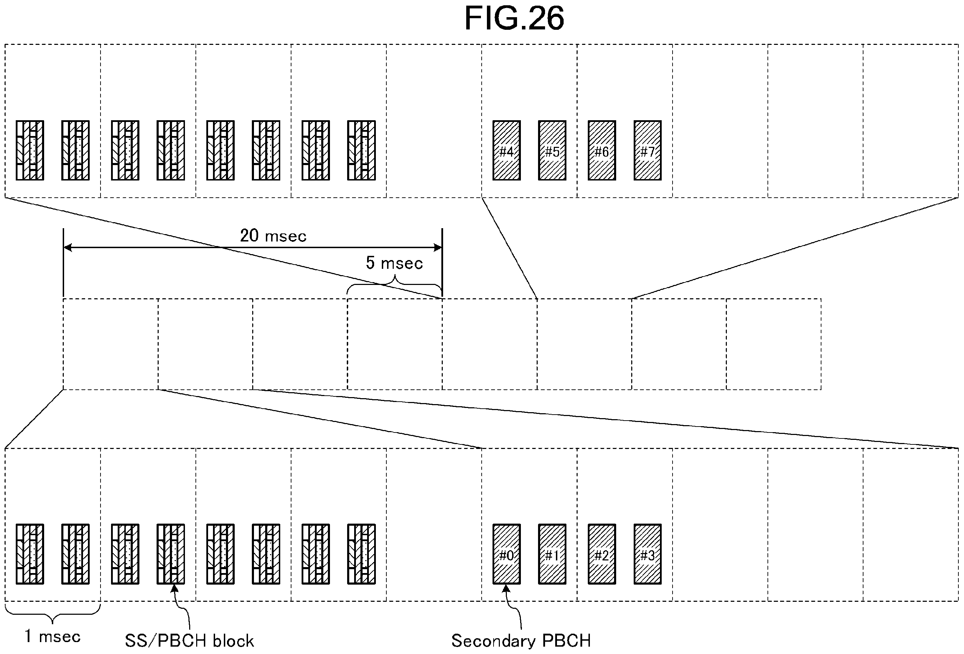

FIG. 26 is a diagram illustrating another exemplary multiplexing method for the secondary PBCH and the SS/PBCH block according to an embodiment of the present disclosure. FIG. 26 illustrates time-multiplexing of the SS/PBCH block and the secondary PBCH, and the SS/PBCH block and the secondary PBCH have different periodicities. In FIG. 26, the horizontal direction represents time, and the vertical direction represents frequency.

In this example, the periodicity of the SS/PBCH block is set to 20 msec, and the periodicity of the secondary PBCH is set to 40 msec. In this configuration, the Secondary PBCHs corresponding to SS/PBCH block indices #0 to #3 are allocated to the sixth and seventh sub-frames of the first periodicity of the SS/PBCH block. Furthermore, the secondary PBCHs corresponding to SS/PBCH block indices #4 to #7 are allocated to the sixth and seventh sub-frames (26th and 27th sub-frames from the head) of the second periodicity of the SS/PBCH block.

(Precoding)

Random precoding may be applied to transmission of the secondary PBCH. Specifically, different precoding may be applied between predetermined resources (e.g., 6 PRBs and one symbol, 24 PRBs and four symbols) in the secondary PBCH, for transmission. The second terminal device 40B uses DMRS included in a predetermined resource to attempt to demodulate the secondary PBCH after the precoding. Furthermore, different precoding is applied to different secondary PBCHs by random precoding. The second terminal device 40B does not assume that the same precoding is applied to two different secondary PBCHs.

Note that space frequency block coding (SFBC) may be applied to the transmission of the secondary PBCH. For example, in two antenna ports, the precoding represented by Formula (1) is applied to the secondary PBCH.

$$\begin{bmatrix} y^{(0)}(2i) \\ y^{(1)}(2i) \\ y^{(0)}(2i+1) \\ y^{(1)}(2i+1) \end{bmatrix} = \frac{1}{\sqrt{2}} \begin{bmatrix} 1 & 0 & j & 0 \\ 0 & -1 & 0 & j \\ 0 & 1 & 0 & j \\ 1 & 0 & -j & 0 \end{bmatrix} \begin{bmatrix} Re\left(x^{(0)}(i)\right) \\ Re\left(x^{(1)}(i)\right) \\ Im\left(x^{(0)}(i)\right) \\ Im\left(x^{(1)}(i)\right) \end{bmatrix} \quad \cdots (1)$$

For example, in four antenna ports, the precoding represented by Formula (2) is applied to the secondary PBCH.

$$\begin{bmatrix} y^{(0)}(4i) \\ y^{(1)}(4i) \\ y^{(2)}(4i) \\ y^{(3)}(4i) \\ y^{(0)}(4i+1) \\ y^{(1)}(4i+1) \\ y^{(2)}(4i+1) \\ y^{(3)}(4i+1) \\ y^{(0)}(4i+2) \\ y^{(1)}(4i+2) \\ y^{(2)}(4i+2) \\ y^{(3)}(4i+2) \\ y^{(0)}(4i+3) \\ y^{(1)}(4i+3) \\ y^{(2)}(4i+3) \\ y^{(3)}(4i+3) \end{bmatrix} = \frac{1}{\sqrt{2}} \begin{bmatrix} 1 & 0 & 0 & 0 & j & 0 & 0 & 0 \\ 0 & 0 & 0 & 0 & 0 & 0 & 0 & 0 \\ 0 & -1 & 0 & 0 & 0 & j & 0 & 0 \\ 0 & 0 & 0 & 0 & 0 & 0 & 0 & 0 \\ 0 & 1 & 0 & 0 & 0 & j & 0 & 0 \\ 0 & 0 & 0 & 0 & 0 & 0 & 0 & 0 \\ 1 & 0 & 0 & 0 & -j & 0 & 0 & 0 \\ 0 & 0 & 0 & 0 & 0 & 0 & 0 & 0 \\ 1 & 0 & 0 & 0 & -j & 0 & 0 & 0 \\ 0 & 0 & 0 & 0 & 0 & 0 & 0 & 0 \\ 0 & 0 & 1 & 0 & 0 & 0 & j & 0 \\ 0 & 0 & 0 & 0 & 0 & 0 & 0 & 0 \\ 0 & 0 & 0 & -1 & 0 & 0 & 0 & j \\ 0 & 0 & 0 & 0 & 0 & 0 & 0 & 0 \\ 0 & 0 & 0 & 1 & 0 & 0 & 0 & j \\ 0 & 0 & 0 & 0 & 0 & 0 & 0 & 0 \\ 0 & 0 & 1 & 0 & 0 & 0 & -j & 0 \end{bmatrix} \begin{bmatrix} Re\left(x^{(0)}(i)\right) \\ Re\left(x^{(1)}(i)\right) \\ Re\left(x^{(2)}(i)\right) \\ Re\left(x^{(3)}(i)\right) \\ Im\left(x^{(0)}(i)\right) \\ Im\left(x^{(1)}(i)\right) \\ Im\left(x^{(2)}(i)\right) \\ Im\left(x^{(3)}(i)\right) \end{bmatrix}$$

$$\cdots (2)$$

(Encoding/Scrambling)

Secondary PBCH is encoded by a polar code. Note that the secondary PBCH may be encoded by another code such as a low density parity check (LDPC) code, convolutional code, or turbo code. The SS/PBCH block may report which encoding is applied.

The secondary PBCH is preferably scrambled with the SS/PBCH block index. For example, Formula (3) is applied to scrambling of the secondary PBCH.

$$\tilde{b}(i) = \left(b(i) + c(i + vM_{bit})\right) mod 2 \quad \cdots (3)$$

Here, b is an information bit of PBCH before scrambling, b~ is an information bit of PBCH after scrambling, c is a scrambling sequence, v is an SS/PBCH block index, and Mbit is the number of information bits of the PBCH.

(QCL(Quasi-Co-Location))

The secondary PBCH is QCL with the SS/PBCH block. Specifically, the terminal device 40 may assume that the SS/PBCH block having a predetermined index is quasi co-located QCL) with secondary PBCH DMRS corresponding to the predetermined index, from the viewpoint of one or more of Doppler broadening, Doppler shift, average delay, delay spread, and spatial Rx parameter.

Note that one SS/PBCH block may be QCL with one secondary PBCH, or one SS/PBCH block may be QCL with multiple secondary PBCHs. When one SS/PBCH block is QCL with multiple secondary PBCHs, the terminal device 40 can soft combine the multiple secondary PBCHs.

<Physical parameters of PBCH>

In another example, a physical parameter of PBCH other than DMRS sequence are used to report some information of parameters that can be transmitted in the MIB described above.

An example of the physical parameter of PBCH includes PBCH masking. Multiple masking procedures can be defined for PBCH CRC. The information of MIB is reported corresponding to the masking successfully decoding PBCH.

An example of the physical parameter of PBCH includes a PBCH scrambling sequence. The Information of the MIB is reported corresponding to the scrambling sequence successfully decoding PBCH.

An example of the physical parameter of PBCH includes the position of the SS/PBCH block. The information of the MIB is reported according to the timing detected by the SS/PBCH block. More specifically, when a candidate SS/PBCH block index detects SS/PBCH blocks equal to or larger than the maximum number (64) of the SS/PBCH block indices in the licensed band operation, the terminal device can recognize the unlicensed band operation.

<Other downlink physical channels>

In another example, in FR3, some of the parameters that can be transmitted in the MIB described above are transmitted on other downlink physical channels received later. Examples of other downlink physical channels include DCI, PDSCH, and the like.

Some of the parameters that can be transmitted in the MIB described above are transmitted, for example, in DCI format 1_0.

Some of the parameters that can be transmitted in the MIB described above are transmitted, for example, in SIB 1 on PDSCH.

As described above, the initial access procedure can be provided for the terminal device 40 supporting FR3.

Note that the application range of the embodiment of the present disclosure is not limited to the terminal device 40 supporting FR3. In the future, the embodiment of the present disclosure can be applied, if the above problem occurs even in a new frequency range (e.g., a frequency range FR0 lower than the FR1 or a frequency range FR4 higher than the FR3).

Furthermore, the application range of the embodiment of the present disclosure is not limited to the base station apparatus 20 and the terminal device 40. The embodiment of the present disclosure can be applied between a communication device that provides MIB and a communication device that receives MIB. In an example, the embodiment of the present disclosure can also be applied to backhaul communication between the base station apparatuses 20 in integrated access and backhaul (IAB). In another example, the embodiment of the present disclosure can be applied to sidelink communication between the terminal devices 40, as long as the terminal devices 40 provides the MIB.

<Modifications>

Some or part of the embodiments described above may be applied to Dual Connectivity described above (e.g., EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity). More specifically, operations in the physical layer described above (e.g., transmission of PBCH, and generation and configuration of various parameters (e.g., PDCCH configuration described above) in PBCH (in MIB)) may be performed by the base station apparatus 20 as the master node, may be performed the base station apparatus 20 as the secondary node, or may be performed by both of the MN and the SN. Additionally or alternatively, the RRC signaling described above may be transmitted by the MN (base station apparatus 20) to the UE (terminal device 40) even if the application destination is a cell managed by the SN. The SN (base station apparatus 20) may establish SRB 3 with the UE (terminal device 40) for direct transmission through the SRB3.

The terminal device or the base station apparatus according to the present embodiment may be implemented by a dedicated computer system or a general-purpose computer system.

For example, communication programs for performing the above-described operations are stored in a computer-readable recording medium such as an optical disk, semiconductor memory, magnetic tape, or flexible disk, for distribution. Then, for example, the programs are installed on the computer to perform the processes described above, and thereby the control device is configured. At this time, the control device may be the terminal device 40, the base station apparatus 20, or an external device (e.g., personal computer). Furthermore, the control device may be an internal device (e.g., each control unit) of the terminal device 40 or the base station apparatus 20.

Furthermore, each of the communication programs may be stored in a disk device included in a server device on a network such as the Internet so as to be, for example, downloaded to the computer. Furthermore, the functions described above may be implemented by cooperation between an operating system (OS) and application software. In this configuration, the portion other than the OS may be stored in a medium for distribution, or the portion other than the OS may be stored in the server device for, for example, downloading or the like to the computer.

Furthermore, in the processing having been described in the above embodiments, all or part of the processing described to be automatically performed can be performed manually, or all or part of the processing described to be performed manually can be performed automatically by a known method. In addition, the processing procedures, specific names, and information including various data and parameters, which are described in the above description or illustrated in the drawings, can be appropriately changed unless otherwise specified. For example, various information illustrated in the drawings are not limited to the illustrated information.

Furthermore, the component elements of the devices are illustrated as functional concepts but are not necessarily required to be physically configured as illustrated. In other words, the specific forms of distribution or integration of the devices are not limited to those illustrated, and all or some thereof can be configured by being functionally or physically distributed or integrated, in any units, according to various loads, usage conditions, or the like.

Furthermore, the embodiments described above can be appropriately combined within a range consistent with the contents of the process.

<<Conclusion>>

Preferred embodiments of the present disclosure have been described above in detail with reference to the accompanying drawings, but the technical scope of the present disclosure is not limited to these examples. A person skilled in the art may obviously find various alternations or modifications within the technical concept described in claims, and it should be understood that the alternations and modifications will naturally come under the technical scope of the present disclosure.

Furthermore, the effects descried herein are merely illustrative or exemplified effects, and are not limitative. In other words, with or in place of the above effects, the technology according to the present disclosure can provide other effects that are apparent to those skilled in the art from the description herein.

Additionally, the present technology may also be configured as below.

    (1) A communication device, comprising

        a transceiver and a processor,
        the processor
        being configured to transmit a master information block (MIB) including first information via the transceiver, in a second frequency range different from a first frequency range,
        the first information corresponding to an index specifying a combination of second information and third information explicitly included in MIB to be transmitted in the first frequency range,
        the number of bits of the first information being smaller than a total number of bits of the second information and the third information.

    (2) The communication device according to (1), wherein

        the second information is information specifying a CORESET configuration for a TypeO-PDCCH CSS set, and
        the third information is information specifying a TypeO-PDCCH CSS set configuration.

    (3) The communication device according to (1), wherein

        the second information is information reporting a subcarrier spacing of PDCCH in a TypeO-PDCCH CSS set; and
        the third information is information reporting a subcarrier offset between an SS/PBCH block and CORESET for a TypeO-PDCCH CSS set.

    (4) The communication device according to (1), wherein

        the second information is information reporting whether operation is a licensed band operation or an unlicensed band operation, and
        the third information is information reporting the number of QCLs of SS/PBCH block.

(5) A communication device comprising:

a transceiver and a processor,
the processor
being configured to receive a master information block (MIB) including first information via the transceiver, in a second frequency range different from a first frequency range,
the first information corresponding to an index specifying a combination of second information and third information explicitly included in MIB to be received in the first frequency range,
the number of bits of the first information being smaller than a total number of bits of the second information and the third information.

(6) The communication device according to (5), wherein

the second information is information specifying a CORESET configuration for a TypeO-PDCCH CSS set, and
the third information is information specifying a TypeO-PDCCH CSS set configuration.

(7) The communication device according to (5), wherein

the second information is information reporting a subcarrier spacing of PDCCH in a TypeO-PDCCH CSS set; and
the third information is information reporting a subcarrier offset between an SS/PBCH block and CORESET for a TypeO-PDCCH CSS set.

(8) The communication device according to (5), wherein

the second information is information reporting whether operation is a licensed band operation or an unlicensed band operation, and
the third information is information reporting the number of QCLs of SS/PBCH block.

(9) A method for a communication device, the method comprising:

transmitting a master information block (MIB) including first information via the transceiver, in a second frequency range different from a first frequency range,
the first information corresponding to an index specifying a combination of second information and third information explicitly included in MIB to be transmitted in the first frequency range, and
the number of bits of the first information being smaller than a total number of bits of the second information and the third information.

(10) A method for a communication device, the method comprising:

receiving a master information block (MIB) including first information via the transceiver, in a second frequency range different from a first frequency range,
the first information corresponding to an index specifying a combination of second information and third information explicitly included in MIB to be received in the first frequency range, and
the number of bits of the first information being smaller than a total number of bits of the second information and the third information.

Reference Signs List

20      BASE STATION APPARATUS

21      SIGNAL PROCESSING UNIT

24, 45  CONTROL UNIT

40      TERMINAL DEVICE

41 SIGNAL PROCESSING UNIT

**Claims**

1. A communication device, comprising

   a transceiver and a processor,
   the processor
   being configured to transmit a master information block (MIB) including first information via the transceiver, in a second frequency range different from a first frequency range,
   the first information corresponding to an index specifying a combination of second information and third information explicitly included in MIB to be transmitted in the first frequency range,
   the number of bits of the first information being smaller than a total number of bits of the second information and the third information.

2. The communication device according to claim 1, wherein

   the second information is information specifying a CORESET configuration for a TypeO-PDCCH CSS set, and
   the third information is information specifying a TypeO-PDCCH CSS set configuration.

3. The communication device according to claim 1, wherein

   the second information is information reporting a subcarrier spacing of PDCCH in a TypeO-PDCCH CSS set; and
   the third information is information reporting a subcarrier offset between an SS/PBCH block and CORESET for a TypeO-PDCCH CSS set.

4. The communication device according to claim 1, wherein

   the second information is information reporting whether operation is a licensed band operation or an unlicensed band operation, and
   the third information is information reporting the number of QCLs of SS/PBCH block.

5. A communication device comprising:

   a transceiver and a processor,
   the processor
   being configured to receive a master information block (MIB) including first information via the transceiver, in a second frequency range different from a first frequency range,
   the first information corresponding to an index specifying a combination of second information and third information explicitly included in MIB to be received in the first frequency range,
   the number of bits of the first information being smaller than a total number of bits of the second information and the third information.

6. The communication device according to claim 5, wherein

   the second information is information specifying a CORESET configuration for a TypeO-PDCCH CSS set, and
   the third information is information specifying a TypeO-PDCCH CSS set configuration.

7. The communication device according to claim 5, wherein

   the second information is information reporting a subcarrier spacing of PDCCH in a TypeO-PDCCH CSS set; and
   the third information is information reporting a subcarrier offset between an SS/PBCH block and CORESET for a TypeO-PDCCH CSS set.

8. The communication device according to claim 5, wherein

   the second information is information reporting whether operation is a licensed band operation or an unlicensed

22

band operation, and
the third information is information reporting the number of QCLs of SS/PBCH block.

9. A method for a communication device, the method comprising:

transmitting a master information block (MIB) including first information via the transceiver, in a second frequency range different from a first frequency range,
the first information corresponding to an index specifying a combination of second information and third information explicitly included in MIB to be transmitted in the first frequency range, and
the number of bits of the first information being smaller than a total number of bits of the second information and the third information.

10. A method for a communication device, the method comprising:

receiving a master information block (MIB) including first information via the transceiver, in a second frequency range different from a first frequency range,
the first information corresponding to an index specifying a combination of second information and third information explicitly included in MIB to be received in the first frequency range, and
the number of bits of the first information being smaller than a total number of bits of the second information and the third information.

# FIG.1

EP 4 322 588 A1

# FIG.2

127 RE

20 PRB

PBCH

PSS    SSS

# FIG.3

# FIG.4

```
MIB ::=                          SEQUENCE {
    systemFrameNumber            BIT STRING (SIZE (6)),
    subCarrierSpacingCommon      ENUMERATED {scs15or60, scs30or120},
    ssb-SubcarrierOffset         INTEGER (0..15),
    dmrs-TypeA-Position          ENUMERATED {pos2, pos3},
    pdcch-ConfigSIB1             PDCCH-ConfigSIB1,
    cellBarred                   ENUMERATED {barred, notBarred},
    intraFreqReselection         ENUMERATED {allowed, notAllowed},
    spare                        BIT STRING (SIZE (1))
}
```

# FIG.5

| MIB field descriptions |
| --- |
| **cellBarred**<br>Value barred means that the cell is barred, as defined in TS 38.304 [20]. |
| **dmrs-TypeA-Position**<br>Position of (first) DM-RS for downlink (see TS 38.211 [16], clause 7.4.1.1.2) and uplink (see TS 38.211 [16], clause 6.4.1.1.3). |
| **intraFreqReselection**<br>Controls cell selection/reselection to intra-frequency cells when the highest ranked cell is barred, or treated as barred by the UE, as specified in TS 38.304 [20]. |
| **pdcch-ConfigSIB1**<br>Determines a common ControlResourceSet (CORESET), a common search space and necessary PDCCH parameters. If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 (see TS 38.213 [13], clause 13). |
| **ssb-SubcarrierOffset**<br>Corresponds to $k_{SSB}$ (see TS 38.213 [13]), which is the frequency domain offset between SSB and the overall resource block grid in number of subcarriers. (See TS 38.211 [16], clause 7.4.3.1).<br>The value range of this field may be extended by an additional most significant bit encoded within PBCH as specified in TS 38.213 [13].<br>This field may indicate that this cell does not provide SIB1 and that there is hence no CORESET#0 configured in MIB (see TS 38.213 [13], clause 13). In this case, the field pdcch-ConfigSIB1 may indicate the frequency positions where the UE may (not) find a SS/PBCH with a control resource set and search space for SIB1 (see TS 38.213 [13], clause 13). |
| **subCarrierSpacingCommon**<br>Subcarrier spacing for SIB1, Msg.2/4 for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz. |
| **systemFrameNumber**<br>The 6 most significant bits (MSB) of the 10-bit System Frame Number (SFN). The 4 LSB of the SFN are conveyed in the PBCH transport block as part of channel coding (i.e. outside the MIB encoding), as defined in clause 7.1 in TS 38.212 [17]. |

# FIG.6

```
-- ASN1START
-- TAG-BCCH-BCH-MESSAGE-START

BCCH-BCH-Message ::=            SEQUENCE {
    message                            BCCH-BCH-MessageType
}

BCCH-BCH-MessageType ::=        CHOICE {
    mib                                MIB,
    messageClassExtension              SEQUENCE {}
}

-- TAG-BCCH-BCH-MESSAGE-STOP
-- ASN1STOP
```

# FIG.7A

Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

# FIG.7B

Set of resource blocks and slot symbols of CORESET for Type0–PDCCH search space set when {SS/PBCH block, PDCCH} SCS is {15, 15} kHz for frequency bands operated with shared spectrum channel access

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | 10 |
| 1 | 1 | 96 | 1 | 12 |
| 2 | 1 | 96 | 1 | 14 |
| 3 | 1 | 96 | 1 | 16 |
| 4 | 1 | 96 | 2 | 10 |
| 5 | 1 | 96 | 2 | 12 |
| 6 | 1 | 96 | 2 | 14 |
| 7 | 1 | 96 | 2 | 16 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7C

Set of resource blocks and slot symbols of CORESET for Type0-PDCCH search space set when {SS/PBCH block, PDCCH} SCS is {15, 30} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 5 |
| 1 | 1 | 24 | 2 | 6 |
| 2 | 1 | 24 | 2 | 7 |
| 3 | 1 | 24 | 2 | 8 |
| 4 | 1 | 24 | 3 | 5 |
| 5 | 1 | 24 | 3 | 6 |
| 6 | 1 | 24 | 3 | 7 |
| 7 | 1 | 24 | 3 | 8 |
| 8 | 1 | 48 | 1 | 18 |
| 9 | 1 | 48 | 1 | 20 |
| 10 | 1 | 48 | 2 | 18 |
| 11 | 1 | 48 | 2 | 20 |
| 12 | 1 | 48 | 3 | 18 |
| 13 | 1 | 48 | 3 | 20 |
| 14 | Reserved | | | |
| 15 | Reserved | | | |

# FIG.7D

Set of resource blocks and slot symbols of CORESET for Type0-PDCCH search space set when {SS/PBCH block, PDCCH} SCS is {30, 15} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 2 |
| 1 | 1 | 48 | 1 | 6 |
| 2 | 1 | 48 | 2 | 2 |
| 3 | 1 | 48 | 2 | 6 |
| 4 | 1 | 48 | 3 | 2 |
| 5 | 1 | 48 | 3 | 6 |
| 6 | 1 | 96 | 1 | 28 |
| 7 | 1 | 96 | 2 | 28 |
| 8 | 1 | 96 | 3 | 28 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7E

Set of resource blocks and slot symbols of CORESET for Type0-PDCCH search space set when {SS/PBCH block, PDCCH} SCS is {30, 30} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |
| 10 | 1 | 48 | 1 | 12 |
| 11 | 1 | 48 | 1 | 14 |
| 12 | 1 | 48 | 1 | 16 |
| 13 | 1 | 48 | 2 | 12 |
| 14 | 1 | 48 | 2 | 14 |
| 15 | 1 | 48 | 2 | 16 |

# FIG.7F

Set of resource blocks and slot symbols of CORESET for Type0-PDCCH search space set when {SS/PBCH block, PDCCH} SCS is {30, 30} kHz for frequency bands operated with shared spectrum channel access

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 1 |
| 2 | 1 | 48 | 1 | 2 |
| 3 | 1 | 48 | 1 | 3 |
| 4 | 1 | 48 | 2 | 0 |
| 5 | 1 | 48 | 2 | 1 |
| 6 | 1 | 48 | 2 | 2 |
| 7 | 1 | 48 | 2 | 3 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7G

Set of resource blocks and slot symbols of CORESET for Type0-PDCCH search space set when {SS/PBCH block, PDCCH} SCS is {30, 15} kHz for frequency bands with minimum channel bandwidth 40MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 4 |
| 1 | 1 | 48 | 2 | 4 |
| 2 | 1 | 48 | 3 | 4 |
| 3 | 1 | 96 | 1 | 0 |
| 4 | 1 | 96 | 1 | 56 |
| 5 | 1 | 96 | 2 | 0 |
| 6 | 1 | 96 | 2 | 56 |
| 7 | 1 | 96 | 3 | 0 |
| 8 | 1 | 96 | 3 | 56 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7H

Set of resource blocks and slot symbols of CORESET for Type0-PDCCH search space set when {SS/PBCH block, PDCCH} SCS is {30, 30} kHz for frequency bands with minimum channel bandwidth 40MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 24 | 3 | 0 |
| 3 | 1 | 24 | 3 | 4 |
| 4 | 1 | 48 | 1 | 0 |
| 5 | 1 | 48 | 1 | 28 |
| 6 | 1 | 48 | 2 | 0 |
| 7 | 1 | 48 | 2 | 28 |
| 8 | 1 | 48 | 3 | 0 |
| 9 | 1 | 48 | 3 | 28 |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7I

Set of resource blocks and slot symbols of CORESET for Type0-PDCCH search space set when {SS/PBCH block, PDCCH} SCS is {120, 60} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 8 |
| 2 | 1 | 48 | 2 | 0 |
| 3 | 1 | 48 | 2 | 8 |
| 4 | 1 | 48 | 3 | 0 |
| 5 | 1 | 48 | 3 | 8 |
| 6 | 1 | 48 | 1 | 28 |
| 7 | 1 | 48 | 2 | 28 |
| 8 | 2 | 48 | 1 | −41 if $k_{SSB}=0$ −42 if $k_{SSB}>0$ |
| 9 | 2 | 48 | 1 | 49 |
| 10 | 2 | 96 | 1 | −41 if $k_{SSB}=0$ −42 if $k_{SSB}>0$ |
| 11 | 2 | 96 | 1 | 97 |
| 12 | Reserved | | | |
| 13 | Reserved | | | |
| 14 | Reserved | | | |
| 15 | Reserved | | | |

# FIG.7J

Set of resource blocks and slot symbols of CORESET for Type0-PDCCH search space set when {SS/PBCH block, PDCCH} SCS is {120, 120} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 48 | 1 | 14 |
| 3 | 1 | 48 | 2 | 14 |
| 4 | 3 | 24 | 2 | $-20$ if $k_{SSB}=0$ $-21$ if $k_{SSB}>0$ |
| 5 | 3 | 24 | 2 | 24 |
| 6 | 3 | 48 | 2 | $-20$ if $k_{SSB}=0$ $-21$ if $k_{SSB}>0$ |
| 7 | 3 | 48 | 2 | 48 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7K

Set of resource blocks and slot symbols of CORESET for Type0-PDCCH search space set when {SS/PBCH block, PDCCH} SCS is {240, 60} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | 0 |
| 1 | 1 | 96 | 1 | 16 |
| 2 | 1 | 96 | 2 | 0 |
| 3 | 1 | 96 | 2 | 16 |
| 4 | Reserved | | | |
| 5 | Reserved | | | |
| 6 | Reserved | | | |
| 7 | Reserved | | | |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7L

Set of resource blocks and slot symbols of CORESET for Type0-PDCCH search space set when {SS/PBCH block, PDCCH} SCS is {240, 120} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 8 |
| 2 | 1 | 48 | 2 | 0 |
| 3 | 1 | 48 | 2 | 8 |
| 4 | 2 | 24 | 1 | −41 if $k_{SSB}=0$ <br> −42 if $k_{SSB}>0$ |
| 5 | 2 | 24 | 1 | 25 |
| 6 | 2 | 48 | 1 | −41 if $k_{SSB}=0$ <br> −42 if $k_{SSB}>0$ |
| 7 | 2 | 48 | 1 | 49 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.8A

Parameters for PDCCH monitoring occasions for Type0-PDCCH CSS set - SS/PBCH block and CORESET multiplexing pattern 1 and FR1

| Index | O | Number of search space sets per slot | M | First symbol index |
|-------|---|--------------------------------------|---|--------------------|
| 0 | 0 | 1 | 1 | 0 |
| 1 | 0 | 2 | 1/2 | $\{0,$ if $i$ is even$\}$, $\{N_{symb}^{CORESET}$, if $i$ is odd$\}$ |
| 2 | 2 | 1 | 1 | 0 |
| 3 | 2 | 2 | 1/2 | $\{0,$ if $i$ is even$\}$, $\{N_{symb}^{CORESET}$, if $i$ is odd$\}$ |
| 4 | 5 | 1 | 1 | 0 |
| 5 | 5 | 2 | 1/2 | $\{0,$ if $i$ is even$\}$, $\{N_{symb}^{CORESET}$, if $i$ is odd$\}$ |
| 6 | 7 | 1 | 1 | 0 |
| 7 | 7 | 2 | 1/2 | $\{0,$ if $i$ is even$\}$, $\{N_{symb}^{CORESET}$, if $i$ is odd$\}$ |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

# FIG.8B

Parameters for PDCCH monitoring occasions for Type0-PDCCH CSS set – SS/PBCH block and CORESET multiplexing pattern 1 and FR2

| Index | O | Number of search space sets per slot | M | First symbol index |
|---|---|---|---|---|
| 0 | 0 | 1 | 1 | 0 |
| 1 | 0 | 2 | 1/2 | {0, if $i$ is even}, {7, if $i$ is odd} |
| 2 | 2.5 | 1 | 1 | 0 |
| 3 | 2.5 | 2 | 1/2 | {0, if $i$ is even}, {7, if $i$ is odd} |
| 4 | 5 | 1 | 1 | 0 |
| 5 | 5 | 2 | 1/2 | {0, if $i$ is even}, {7, if $i$ is odd} |
| 6 | 0 | 2 | 1/2 | {0, if $i$ is even}, {$N_{symb}^{CORESET}$, if $i$ is odd} |
| 7 | 2.5 | 2 | 1/2 | {0, if $i$ is even}, {$N_{symb}^{CORESET}$, if $i$ is odd} |
| 8 | 5 | 2 | 1/2 | {0, if $i$ is even}, {$N_{symb}^{CORESET}$, if $i$ is odd} |
| 9 | 7.5 | 1 | 1 | 0 |
| 10 | 7.5 | 2 | 1/2 | {0, if $i$ is even}, {7, if $i$ is odd} |
| 11 | 7.5 | 2 | 1/2 | {0, if $i$ is even}, {$N_{symb}^{CORESET}$, if $i$ is odd} |
| 12 | 0 | 1 | 2 | 0 |
| 13 | 5 | 1 | 2 | 0 |
| 14 | Reserved | | | |
| 15 | Reserved | | | |

# FIG.8C

PDCCH monitoring occasions for Type0-PDCCH CSS set - SS/PBCH block and CORESET multiplexing pattern 2 and {SS/PBCH block, PDCCH} SCS {120, 60} kHz

| Index | PDCCH monitoring occasions (SFN and slot number) | First symbol index (k = 0, 1,..., 15) |
|---|---|---|
| 0 | $SFN_C=SFN_{SSB,i}$ $n_C=n_{SSB,i}$ | 0, 1, 6, 7 for i=4k, i=4k+1, i=4k+2, i=4k+3 |
| 1 | Reserved | |
| 2 | Reserved | |
| 3 | Reserved | |
| 4 | Reserved | |
| 5 | Reserved | |
| 6 | Reserved | |
| 7 | Reserved | |
| 8 | Reserved | |
| 9 | Reserved | |
| 10 | Reserved | |
| 11 | Reserved | |
| 12 | Reserved | |
| 13 | Reserved | |
| 14 | Reserved | |
| 15 | Reserved | |

# FIG.8D

PDCCH monitoring occasions for Type0-PDCCH CSS set – SS/PBCH block and CORESET multiplexing pattern 2 and {SS/PBCH block, PDCCH} SCS {240, 120} kHz

| Index | PDCCH monitoring occasions (SFN and slot number) | First symbol index (k = 0, 1,..., 7) |
|---|---|---|
| 0 | $SFN_C = SFN_{SSB,i}$ $n_C = n_{SSB,i}$ or $n_C = n_{SSB,i} - 1$ | 0, 1, 2, 3, 0, 1 in i=8k, i=8k+1, i=8k+2, i=8k+3, i=8k+6, i=8k+7 ($n_C = n_{SSB,i}$) 12, 13 in i=8k+4, i=8k+5 ($n_C = n_{SSB,i} - 1$) |
| 1 | Reserved | |
| 2 | Reserved | |
| 3 | Reserved | |
| 4 | Reserved | |
| 5 | Reserved | |
| 6 | Reserved | |
| 7 | Reserved | |
| 8 | Reserved | |
| 9 | Reserved | |
| 10 | Reserved | |
| 11 | Reserved | |
| 12 | Reserved | |
| 13 | Reserved | |
| 14 | Reserved | |
| 15 | Reserved | |

# FIG.8E

PDCCH monitoring occasions for Type0-PDCCH CSS set - SS/PBCH block and CORESET multiplexing pattern 3 and {SS/PBCH block, PDCCH} SCS {120, 120} kHz

| Index | PDCCH monitoring occasions (SFN and slot number) | First symbol index (k = 0, 1,..., 15) |
|---|---|---|
| 0 | $SFN_C=SFN_{SSB,i}$ $n_C=n_{SSB,i}$ | 4, 8, 2, 6, in i=4k, i=4k+1, i=4k+2, i=4k+3 |
| 1 | | Reserved |
| 2 | | Reserved |
| 3 | | Reserved |
| 4 | | Reserved |
| 5 | | Reserved |
| 6 | | Reserved |
| 7 | | Reserved |
| 8 | | Reserved |
| 9 | | Reserved |
| 10 | | Reserved |
| 11 | | Reserved |
| 12 | | Reserved |
| 13 | | Reserved |
| 14 | | Reserved |
| 15 | | Reserved |

# FIG.9A

# FIG.9B

# FIG.9C

# FIG.10A

| $k_{SSB}$ | 16 x controlResourceSetZero+searchSpaceZero | $N_{GSCN}^{Offset}$ |
|---|---|---|
| 24 | 0, 1, ···, 255 | 1, 2, ···, 256 |
| 25 | 0, 1, ···, 255 | 257, 258, ···, 512 |
| 26 | 0, 1, ···, 255 | 513, 514, ···, 768 |
| 27 | 0, 1, ···, 255 | -1, -2, ···, -256 |
| 28 | 0, 1, ···, 255 | -257, -258, ···, -512 |
| 29 | 0, 1, ···, 255 | -513, -514, ···, -768 |
| 30 | 0, 1, ···, 255 | Reserved, Reserved, ···, Reserved |

# FIG.10B

| $k_{SSB}$ | 16 x controlResourceSetZero+searchSpaceZero | $N_{GSCN}^{Offset}$ |
|---|---|---|
| 12 | 0, 1, ···, 255 | 1, 2, ···, 256 |
| 13 | 0, 1, ···, 255 | -1, -2, ···, -256 |
| 14 | 0, 1, ···, 255 | Reserved, Reserved, ···, Reserved |

# FIG.11

| subCarrierSpacingCommon | LSB of ssb-SubcarrierOffset | $N_{SSB}^{QCL}$ |
|---|---|---|
| scs15or60 | 0 | 1 |
| scs15or60 | 1 | 2 |
| scs30or120 | 0 | 4 |
| scs30or120 | 1 | 8 |

# FIG.12

# FIG.13

40

TERMINAL DEVICE

41

SIGNAL PROCESSING UNIT

411

RECEPTION PROCESSING UNIT

213

| 411a | 411b | 411c | 411d |
|------|------|------|------|
| RADIO RECEPTION UNIT | DEMUL-TIPLEXING UNIT | DEMOD-ULATION UNIT | DECODING UNIT |

412

TRANSMISSION PROCESSING UNIT

| 412d | 412c | 412b | 412a |
|------|------|------|------|
| RADIO TRANSMIS-SION UNIT | MUL-TIPLEXING UNIT | MOD-ULATION UNIT | ENCODING UNIT |

42

STORAGE UNIT

44

INPUT/OUTPUT UNIT

45

CONTROL UNIT

# FIG.14

Secondary PBCH

20 PRB

SS/PBCH block

96 PRB

24 PRB

1 slot

FIRST
CORESET #0

SECOND
CORESET #0

# FIG.15

| Index of pdcch-ConfigSIB1 | Index of set of resource blocks and slot symbols of CORESET for Type0-PDCCH search space set | Index of parameters for PDCCH monitoring occasions for Type0-PDCCH CSS set |
|---|---|---|
| 0 | 0 | 0 |
| 1 | 0 | 1 |
| 2 | 0 | 2 |
| 3 | 0 | 3 |
| 4 | 0 | 4 |
| 5 | 0 | 5 |
| 6 | 0 | 6 |
| 7 | 0 | 7 |
| 8 | 0 | 8 |
| 9 | 0 | 9 |
| 10 | 0 | 10 |
| 11 | 0 | 11 |
| 12 | 0 | 12 |
| 13 | 0 | 13 |
| 14 | 1 | 0 |
| 15 | 1 | 1 |
| 16 | 1 | 2 |
| 17 | 1 | 3 |
| 18 | 1 | 4 |
| 19 | 1 | 5 |
| 20 | 1 | 6 |
| 21 | 1 | 7 |
| 22 | 1 | 8 |
| 23 | 1 | 9 |
| 24 | 1 | 10 |
| 25 | 1 | 11 |
| 26 | 1 | 12 |
| 27 | 1 | 13 |
| 28 | 2 | 0 |
| 29 | 2 | 1 |
| 30 | 2 | 2 |
| 31 | 2 | 3 |
| 32 | 2 | 4 |
| 33 | 2 | 5 |
| 34 | 2 | 6 |
| 35 | 2 | 7 |
| 36 | 2 | 8 |
| 37 | 2 | 9 |
| 38 | 2 | 10 |
| 39 | 2 | 11 |
| 40 | 2 | 12 |
| 41 | 2 | 13 |
| 42 | 3 | 0 |
| 43 | 3 | 1 |
| 44 | 3 | 2 |
| 45 | 3 | 3 |
| 46 | 3 | 4 |
| 47 | 3 | 5 |
| 48 | 3 | 6 |
| 49 | 3 | 7 |
| 50 | 3 | 8 |
| 51 | 3 | 9 |
| 52 | 3 | 10 |
| 53 | 3 | 11 |
| 54 | 3 | 12 |
| 55 | 3 | 13 |
| 56 | 4 | 0 |
| 57 | 5 | 0 |
| 58 | 6 | 0 |
| 59 | 7 | 0 |

# FIG.16

| Index of pdcch-ConfigSIB1 | SS/PBCH block and CORESET multiplexing pattern | Number of RBs of CORESET for Type0-PDCCH search space set | Number of symbols of CORESET for Type0-PDCCH search space set | Offset (RBs) | O | Number of search space sets per slot | M | First symbol index for PDCCH monitoring occasion for Type0-PDCCH CSS set | PDCCH monitoring occasions (SFN and slot number) |
|---|---|---|---|---|---|---|---|---|---|
| 0 | 1 | 24 | 2 | 0 | 0 | 1 | 1 | 0 | - |
| 1 | 1 | 24 | 2 | 0 | 0 | 2 | 1/2 | {0, if i is even}, {7, if i is odd} | - |
| 2 | 1 | 24 | 2 | 0 | 2.5 | 1 | 1 | 0 | - |
| 3 | 1 | 24 | 2 | 0 | 2.5 | 2 | 1/2 | {0, if i is even}, {7, if i is odd} | - |
| 4 | 1 | 24 | 2 | 0 | 5 | 1 | 1 | 0 | - |
| 5 | 1 | 24 | 2 | 0 | 5 | 2 | 1/2 | {0, if i is even}, {7, if i is odd} | - |
| 6 | 1 | 24 | 2 | 0 | 0 | 2 | 1/2 | {0, if i is even}, {$N_{symb}^{CORESET}$, if i is odd} | - |
| 7 | 1 | 24 | 2 | 0 | 2.5 | 2 | 1/2 | {0, if i is even}, {$N_{symb}^{CORESET}$, if i is odd} | - |
| 8 | 1 | 24 | 2 | 0 | 5 | 2 | 1/2 | {0, if i is even}, {$N_{symb}^{CORESET}$, if i is odd} | - |
| 9 | 1 | 24 | 2 | 0 | 7.5 | 1 | 1 | 0 | - |
| 10 | 1 | 24 | 2 | 0 | 7.5 | 2 | 1/2 | {0, if i is even}, {7, if i is odd} | - |
| 11 | 1 | 24 | 2 | 0 | 7.5 | 2 | 1/2 | {0, if i is even}, {$N_{symb}^{CORESET}$, if i is odd} | - |
| 12 | 1 | 24 | 2 | 0 | 0 | 1 | 2 | 0 | - |
| 13 | 1 | 24 | 2 | 0 | 5 | 1 | 2 | 0 | - |
| 14 | 1 | 24 | 2 | 4 | 0 | 1 | 1 | 0 | - |
| 15 | 1 | 24 | 2 | 4 | 0 | 2 | 1/2 | {0, if i is even}, {7, if i is odd} | - |
| 16 | 1 | 24 | 2 | 4 | 2.5 | 1 | 1 | 0 | - |
| 17 | 1 | 24 | 2 | 4 | 2.5 | 2 | 1/2 | {0, if i is even}, {7, if i is odd} | - |
| 18 | 1 | 24 | 2 | 4 | 5 | 1 | 1 | 0 | - |
| 19 | 1 | 24 | 2 | 4 | 5 | 2 | 1/2 | {0, if i is even}, {7, if i is odd} | - |
| 20 | 1 | 24 | 2 | 4 | 0 | 2 | 1/2 | {0, if i is even}, {$N_{symb}^{CORESET}$, if i is odd} | - |
| 21 | 1 | 24 | 2 | 4 | 2.5 | 2 | 1/2 | {0, if i is even}, {$N_{symb}^{CORESET}$, if i is odd} | - |
| 22 | 1 | 24 | 2 | 4 | 5 | 2 | 1/2 | {0, if i is even}, {$N_{symb}^{CORESET}$, if i is odd} | - |
| 23 | 1 | 24 | 2 | 4 | 7.5 | 1 | 1 | 0 | - |
| 24 | 1 | 24 | 2 | 4 | 7.5 | 2 | 1/2 | {0, if i is even}, {7, if i is odd} | - |
| 25 | 1 | 24 | 2 | 4 | 7.5 | 2 | 1/2 | {0, if i is even}, {$N_{symb}^{CORESET}$, if i is odd} | - |
| 26 | 1 | 24 | 2 | 4 | 0 | 1 | 2 | 0 | - |
| 27 | 1 | 24 | 2 | 4 | 5 | 1 | 2 | 0 | - |
| 28 | 1 | 48 | 1 | 14 | 0 | 1 | 1 | 0 | - |
| 29 | 1 | 48 | 1 | 14 | 0 | 2 | 1/2 | {0, if i is even}, {7, if i is odd} | - |
| 30 | 1 | 48 | 1 | 14 | 2.5 | 1 | 1 | 0 | - |
| 31 | 1 | 48 | 1 | 14 | 2.5 | 2 | 1/2 | {0, if i is even}, {7, if i is odd} | - |
| 32 | 1 | 48 | 1 | 14 | 5 | 1 | 1 | 0 | - |
| 33 | 1 | 48 | 1 | 14 | 5 | 2 | 1/2 | {0, if i is even}, {7, if i is odd} | - |
| 34 | 1 | 48 | 1 | 14 | 0 | 2 | 1/2 | {0, if i is even}, {$N_{symb}^{CORESET}$, if i is odd} | - |
| 35 | 1 | 48 | 1 | 14 | 2.5 | 2 | 1/2 | {0, if i is even}, {$N_{symb}^{CORESET}$, if i is odd} | - |
| 36 | 1 | 48 | 1 | 14 | 5 | 2 | 1/2 | {0, if i is even}, {$N_{symb}^{CORESET}$, if i is odd} | - |
| 37 | 1 | 48 | 1 | 14 | 7.5 | 1 | 1 | 0 | - |
| 38 | 1 | 48 | 1 | 14 | 7.5 | 2 | 1/2 | {0, if i is even}, {7, if i is odd} | - |
| 39 | 1 | 48 | 1 | 14 | 7.5 | 2 | 1/2 | {0, if i is even}, {$N_{symb}^{CORESET}$, if i is odd} | - |
| 40 | 1 | 48 | 1 | 14 | 0 | 1 | 2 | 0 | - |
| 41 | 1 | 48 | 1 | 14 | 5 | 1 | 2 | 0 | - |
| 42 | 1 | 48 | 2 | 14 | 0 | 1 | 1 | 0 | - |
| 43 | 1 | 48 | 2 | 14 | 0 | 2 | 1/2 | {0, if i is even}, {7, if i is odd} | - |
| 44 | 1 | 48 | 2 | 14 | 2.5 | 1 | 1 | 0 | - |
| 45 | 1 | 48 | 2 | 14 | 2.5 | 2 | 1/2 | {0, if i is even}, {7, if i is odd} | - |
| 46 | 1 | 48 | 2 | 14 | 5 | 1 | 1 | 0 | - |
| 47 | 1 | 48 | 2 | 14 | 5 | 2 | 1/2 | {0, if i is even}, {7, if i is odd} | - |
| 48 | 1 | 48 | 2 | 14 | 0 | 2 | 1/2 | {0, if i is even}, {$N_{symb}^{CORESET}$, if i is odd} | - |
| 49 | 1 | 48 | 2 | 14 | 2.5 | 2 | 1/2 | {0, if i is even}, {$N_{symb}^{CORESET}$, if i is odd} | - |
| 50 | 1 | 48 | 2 | 14 | 5 | 2 | 1/2 | {0, if i is even}, {$N_{symb}^{CORESET}$, if i is odd} | - |
| 51 | 1 | 48 | 2 | 14 | 7.5 | 1 | 1 | 0 | - |
| 52 | 1 | 48 | 2 | 14 | 7.5 | 2 | 1/2 | {0, if i is even}, {7, if i is odd} | - |
| 53 | 1 | 48 | 2 | 14 | 7.5 | 2 | 1/2 | {0, if i is even}, {$N_{symb}^{CORESET}$, if i is odd} | - |
| 54 | 1 | 48 | 2 | 14 | 0 | 1 | 2 | 0 | - |
| 55 | 1 | 48 | 2 | 14 | 5 | 1 | 2 | 0 | - |
| 56 | 3 | 24 | 2 | -20 if $k_{SSB}$=0, -21 if $k_{SSB}$>0 | - | - | - | 4, 8, 2, 6 in i=4k, i=4k+1, i=4k+2, i=4k+3 | $SFN_c = SFN_{SSB,i}$, $n_c = n_{SSB,i}$ |
| 57 | 3 | 24 | 2 | 24 | - | - | - | 4, 8, 2, 6 in i=4k, i=4k+1, i=4k+2, i=4k+3 | $SFN_c = SFN_{SSB,i}$, $n_c = n_{SSB,i}$ |
| 58 | 3 | 48 | 2 | -20 if $k_{SSB}$=0, -21 if $k_{SSB}$>0 | - | - | - | 4, 8, 2, 6 in i=4k, i=4k+1, i=4k+2, i=4k+3 | $SFN_c = SFN_{SSB,i}$, $n_c = n_{SSB,i}$ |
| 59 | 3 | 48 | 2 | 48 | - | - | - | 4, 8, 2, 6 in i=4k, i=4k+1, i=4k+2, i=4k+3 | $SFN_c = SFN_{SSB,i}$, $n_c = n_{SSB,i}$ |

# FIG.17

| $k_{SSB}$ | pdcchConfig-SIB1 | $N_{GSCN}^{Offset}$ |
|:---:|:---:|:---:|
| 12 | 0, 1, $\cdots$, 64 | 1, 2, $\cdots$, 64 |
| 13 | 0, 1, $\cdots$, 64 | -1, -2, $\cdots$, -64 |
| 14 | 0, 1, $\cdots$, 64 | Reserved, Reserved, $\cdots$, Reserved |

# FIG.18

| Index | subCarrierSpacingCommon | Ssb-SubcarrierOffset |
|---|---|---|
| 0 | 120kHz | 0 |
| 1 | 120kHz | 1 |
| 2 | 120kHz | 2 |
| 3 | 120kHz | 3 |
| 4 | 120kHz | 4 |
| 5 | 120kHz | 5 |
| 6 | 120kHz | 6 |
| 7 | 120kHz | 7 |
| 8 | 120kHz | 8 |
| 9 | 120kHz | 9 |
| 10 | 120kHz | 10 |
| 11 | 120kHz | 11 |
| 12 | 480kHz | 0 |
| 13 | 480kHz | 1 |
| 14 | 480kHz | 2 |
| 15 | 480kHz | 3 |
| 16 | 480kHz | 4 |
| 17 | 480kHz | 5 |
| 18 | 480kHz | 6 |
| 19 | 480kHz | 7 |
| 20 | 480kHz | 8 |
| 21 | 480kHz | 9 |
| 22 | 480kHz | 10 |
| 23 | 480kHz | 11 |
| 24 | 480kHz | 12 |
| 25 | 480kHz | 13 |
| 26 | 480kHz | 14 |
| 27 | 480kHz | 15 |
| 28 | 480kHz | 16 |
| 29 | 480kHz | 17 |
| 30 | 480kHz | 18 |
| 31 | 480kHz | 19 |
| 32 | 480kHz | 20 |
| 33 | 480kHz | 21 |
| 34 | 480kHz | 22 |
| 35 | 480kHz | 23 |
| 36 | 480kHz | 24 |
| 37 | 480kHz | 25 |
| 38 | 480kHz | 26 |
| 39 | 480kHz | 27 |
| 40 | 480kHz | 28 |
| 41 | 480kHz | 29 |
| 42 | 480kHz | 30 |
| 43 | 480kHz | 31 |
| 44 | 480kHz | 32 |
| 45 | 480kHz | 33 |
| 46 | 480kHz | 34 |
| 47 | 480kHz | 35 |
| 48 | 480kHz | 36 |
| 49 | 480kHz | 37 |
| 50 | 480kHz | 38 |
| 51 | 480kHz | 39 |
| 52 | 480kHz | 40 |
| 53 | 480kHz | 41 |
| 54 | 480kHz | 42 |
| 55 | 480kHz | 43 |
| 56 | 480kHz | 44 |
| 57 | 480kHz | 45 |
| 58 | 480kHz | 46 |
| 59 | 480kHz | 47 |

# FIG.19

| Index | 16 x controlResourceSetZero+searchSpaceZero | $N_{GSCN}^{Offset}$ |
|---|---|---|
| 60 | 0, 1, ···, 255 | 1, 2, ···, 256 |
| 61 | 0, 1, ···, 255 | -1, -2, ···, -256 |
| 62 | 0, 1, ···, 255 | Reserved, Reserved, ···, Reserved |

# FIG.20

| index | Operation with or without shared spectrum channel access | $N_{SSB}^{QCL}$ |
|---|---|---|
| 0 | Operation without shared spectrum channel access | - |
| 1 | Operation with shared spectrum channel access | 64 |
| 2 | Operation with shared spectrum channel access | 32 |
| 3 | Operation with shared spectrum channel access | 16 |
| 4 | Operation with shared spectrum channel access | 8 |
| 5 | Operation with shared spectrum channel access | 4 |
| 6 | Operation with shared spectrum channel access | 2 |
| 7 | Operation with shared spectrum channel access | 1 |

# FIG.21

DMRS associated with
Secondary PBCH

Secondary PBCH

24 PRB

4 symbol

# FIG.22

20 msec

5 msec

Secondary PBCH

#0 #1 #2 #3 #4 #5 #6 #7

1 msec

SS/PBCH block

# FIG.23

20 msec

5 msec

1 msec

SS/PBCH block

#0 #1 #2 #3 #4 #5 #6 #7

Secondary PBCH

EP 4 322 588 A1

# FIG.24

20 msec

5 msec

1 msec    SS/PBCH block    Secondary PBCH

# FIG.25

20 msec

5 msec

1 msec

SS/PBCH block

Secondary PBCH

###
0 1 2

###
3 4 5

FIG.26

20 msec

5 msec

1 msec

#4 #5 #6 #7

#0 #1 #2 #3

Secondary PBCH

SS/PBCH block

# INTERNATIONAL SEARCH REPORT

| International application No. |
|---|
| **PCT/JP2022/005836** |

## A. CLASSIFICATION OF SUBJECT MATTER

*H04W 16/28*(2009.01)i; *H04W 48/10*(2009.01)i
FI: H04W48/10; H04W16/28

According to International Patent Classification (IPC) or to both national classification and IPC

## B. FIELDS SEARCHED

Minimum documentation searched (classification system followed by classification symbols)

H04W16/28; H04W48/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | Ad-hoc Chair (Ericsson), Session notes for 8.2 (Study on supporting NR from 52.6 GHz to 71 GHz) [online], 3GPP TSG RAN WG1 #104-e R1-2102192, 05 February 2021 chapter 8.2.1 | 1-10 |
| A | WO 2021/009817 A1 (NTT DOCOMO INC.) 21 January 2021 (2021-01-21) paragraphs [0013], [0056], [0160]-[0162] | 1-10 |
| A | WO 2021/005663 A1 (NTT DOCOMO INC.) 14 January 2021 (2021-01-14) paragraphs [0106], [0107], [0144]-[0151] | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/005836**

| Patent document cited in search report | | | Publication date (day/month/year) | Patent family member(s) | Publication date (day/month/year) |
|---|---|---|---|---|---|
| WO | 2021/009817 | A1 | 21 January 2021 | (Family: none) | |
| WO | 2021/005663 | A1 | 14 January 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; Study on supporting NR from 52.6 GHz to 71 GHz (Release 17). *TR 38.808,* December 2020, vol. 1.0.0